(19) Europäisches Patentamt
European Patent Office
Office européen des brevets

(11) Veröffentlichungsnummer : **0 490 950 B1**

(12) **EUROPÄISCHE PATENTSCHRIFT**

(45) Veröffentlichungstag der Patentschrift : **28.04.93 Patentblatt 93/17**

(51) Int. Cl.$^5$ : **B01D 67/00,** C08J 7/16

(21) Anmeldenummer : **90913482.7**

(22) Anmeldetag : **06.09.90**

(86) Internationale Anmeldenummer : **PCT/EP90/01498**

(87) Internationale Veröffentlichungsnummer : **WO 91/03310 21.03.91 Gazette 91/07**

# (54) VERFAHREN ZUR OBERFLÄCHENPFROPFUNG VON FORMKÖRPERN, INSBESONDERE AUCH MIKROPORÖSEN MEMBRANEN AUS STICKSTOFFHALTIGEN POLYMEREN.

(30) Priorität : **06.09.89 DE 3929648**

(43) Veröffentlichungstag der Anmeldung : **24.06.92 Patentblatt 92/26**

(45) Bekanntmachung des Hinweises auf die Patenterteilung : **28.04.93 Patentblatt 93/17**

(84) Benannte Vertragsstaaten : **DE FR GB**

(56) Entgegenhaltungen :
**DE-A- 3 509 068**
**DE-A- 3 712 391**
**DE-A- 3 712 491**
**Dialog Information Services, File 351, World Patent Index 81-90, Dialog accession no. 3607809, (IKADA Y), "Surface coating plastic articles by graftpolymerisation involves corona discharge treatment of plastic surface then graft polymerising ethylenically unsaturated monomer"**

(56) Entgegenhaltungen :
**Journal of Polymer Science, Teile C, Nr. 23, S. 419-432, 1968, C.H. Bamford et al.: "A New Technique for Polymer Grafting"**
**Makromol. Chem., Band 180, 1979, Kien Van Phung et al.: "Pfropfung von Vinylverbindungen auf Polyamide", S. 1825-1827**

(73) Patentinhaber : **SARTORIUS AG**
**Weender Landstrasse 94-108**
**W-3400 Göttingen (DE)**

(72) Erfinder : **HÖRL, Hans-Heinrich**
**Breslauer Strasse 5**
**W-3506 Bovenden (DE)**
Erfinder : **NUSSBAUMER, Dietmar**
**Im Tale 1**
**W-3400 Göttingen (DE)**
Erfinder : **WÜNN, Eberhard**
**Obere Wiesen 6**
**W-3400 Göttingen (DE)**

(74) Vertreter : **Köhler, Rudolf**
**c/o Sartorius AG Weender Landstrasse 94-108**
**W-3400 Göttingen (DE)**

**EP 0 490 950 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Verfahren zur Oberflächenpfropfung von Formkörpern gemäß dem Oberbegriff des Anspruchs 1, sowie gepfropfte Formkörper und deren Verwendung für die adsorptive Bindung.

### Stand der Technik.

Nach einem verbreiteten Pfropfverfahren werden in die Kette des Basispolymeren, beispielsweise durch energiereiche Strahlung radikalische Gruppen eingeführt, an denen die Pfropfung durch Radikalkettenpolymerisation erfolgen kann.

Die Erzeugung der den Ausgangspunkt der Pfropfung bewirkenden aktivierten, beispielsweise radikalischen Gruppen erfolgt bei diesen Pfropfverfahren ungezielt, d.h. die Pfropfung erfolgt nicht ausschließlich am einer bestimmten Gruppierung der Kette des Basispolymeren, wie z.B. am Stickstoffatom, sondern an sämtlichen durch hochenergetische Strahlung aktivierbaren Stellen der Polymerkette, z.B. auch an Methylengruppen. Daneben erfolgt durch hochenergetische Strahlung ein mehr oder weniger starker Abbau von Polymerketten, wobei infolge der dadurch bedingten Erniedrigung des Polymerisationsgrades eine Schädigung der mechanischen Festigkeit des Basispolymeren eintritt. Ebenfalls unerwünschte Nebenraktionen bei der strahleninduzierten Pfropfung sind Vernetzungsreaktionen, die zu einer Versprödung des Materials führen.

Andere Verfahren der Pfropfcopolymerisation beruhen auf der Aktivierung unter Radikalbildung durch starke Oxidationsmittel, wie z.B. $Ce^{IV}$-Salze. Dieses Verfahren ist nur bei sehr niedrigen pH-Werten, nämlich unter pH=2 anwendbar, weil andernfalls eine hydrolytische Ausfällung des $Ce^{IV}$-Salzes eintritt. Die Anwendung dieses Verfahrens bei den für das erfindungsgemäße Verfahren vorgesehenen Polymeren führt zu einer hydrolytischen Schädigung dieser Polymeren, wobei ebenfalls eine Verminderung der mechanischen Festigkeit infolge von Herabsetzung des Polymerisationsgrades zu beobachten ist. Außerdem ist auch nach diesem Verfahren keine gezielte Pfropfung zur Erhöhung der chemischen Beständigkeit des Basispolymeren möglich.

Wieder andere Verfahren der Pfropfpolymerisation beruhen auf der Kettenübertragung, indem durch einen Radikalinitiator eine Homopolymerisation des Monomeren in Gegenwart des zu pfropfenden Basispolymeren induziert wird, wobei in der Regel hohe Temperaturen angewandt werden müssen (70-80 °C). Die Pfropfung erfolgt in diesem Fall durch Wechselwirkung des wachsenden Polymerradikals mit dem Basispolymer. Die Pfropfstelle läßt sich auch in diesem Fall nicht gezielt beinflussen. Ein weiterer Nachteil dieser Pfropfverfahren besteht darin, daß nur ein geringer Teil des eingesetzten Monomeren für die Pfropfung verbraucht wird, während gleichzeitig ein erheblicher Anteil an Homopolymer entsteht. Die Bildung von Homompolyomer ist deshalb unerwünscht, weil dadurch die Menge des erforderlichen Monomeren erhöht wird, was die Wirtschaftlichkeit des Verfahrens beeinträchtigt, und außerdem ein eigener Verfahrensschritt zur Entfernung des Homopolymeren erforderlich wird.

Den bisher genannten Pfropfverfahren ist gemeinsam, daß die Pfropfung an keiner streng definierten Stelle des Basispolymeren, insbesondere nicht bevorzugt am Stickstoffatom eintritt. Der chemische Charakter der entsprechenden Bindungen, wie der Peptidgruppe und der Carbonamidsäuregruppe, wird daher nicht verändert und ein positiver Einfluß auf die chemische Stabilität dieser Bindungen kann daher nicht erfolgen.

Ferner ist bekannt, Polyamide mit Acrylamid oder Acrylnitril in der Weise zu pfropfen, daß in einer ersten Verfahrensstufe die Wasserstoffatome an den Stickstoffatomen durch Chloratome ersetzt werden. Die halogensubstituierten Polyamide werden dann durch Hydrazin oder Eisen-II-Salze wieder in das Ausgangspolymere überführt, wobei ein radikalischer Obergangszustand am Stickstoff auftritt. In Gegenwart der genannten Monomere erfolgt, wie auch bei anderen Redox-initiierten Polymerisationsverfahren, eine Radikalkettenpolymerisation am Stickstoff. Diese Reaktion wird beispielsweise von K.V. Phung und R.C. Schulz in "Makromolekulare Chemie", 180, 1825 (1979) beschrieben. Sie wurde in der genannten Arbeit angewandt, um den erwähnten radikalischen Obergangszustand bei der Reduktion nachzuweisen

Eine andere Arbeit, welche die Pfropfung auf N-halogenierten Polyamiden zum Gegenstand hat, beschreibt die Initiierung durch Metallcarbonyle (C.H. Bamford, F.C. Duncan, R.J.W. Reynolds in "J.Polym. Sci" Teil C, 419-432 (1968).

Durch keines der bekannten Verfahren ist es jedoch auf wirtschaftliche Weise möglich, eine Oberflächenpfropfung auf Formkörpern aus stickstoffhaltigen Polymeren unter Steuerung der Eindringtiefe und der Pfropfungsdichte durchzuführen.

### Aufgabenstellung und Lösung

Der Erfindung liegt die Aufgabe zugrunde, neue gepfropfte Formkörper und ein Verfahren zur gezielten Veränderung der Oberflächeneigenschaften von Formkörpern durch Oberflächenpfropfung zur Verfügung zu stellen, wobei das Verfahren sowohl für die Oberflächenpfropfung kompakter als auch mikroporöser oder faseriger Formkörper, insbesondere solcher in flächiger Bahnform, geeignet ist, ohne technisch schwer handhabbare Hilfsmittel wie Quellen hochenergetischer Strahlung oder die Anwendung hoher Temperaturen auskommt und insbesondere den vorerwähnten Nachteil der unkontrollierten Eindringtiefe nicht aufweist.

Diese Aufgabe wird gelöst durch ein Verfahren gemäß Anspruch 1, gepfropfte Formkörper gemäß Anspruch 33 sowie deren Verwendung gemäß Anspruch 40.

Die Veränderungen der Oberflächeneigenschaften besteht sowohl in der Erhöhung der chemischen Beständigkeit des Oberflächenbereichs, die in jedem Falle erfolgen soll, als auch in der Beeinflussung sonstiger chemischer und/oder physikalischer Oberflächeneigenschaften, insbesondere des Benetzungs- und Adsorptionsverhaltens, ohne daß die bei herkömmlichen Pfropfverfahren auftretenden Nachteile wirksam werden. Diese Nachteile sind, explizit ausgedrückt: Kettenabbau und Vernetzungsreaktionen am Basispolymer und/oder hoher Anteil an Homopolymerisat, sowie unbeabsichtigtes bzw. unkontrollierbares Fortschreiten der Pfropfung in die Tiefe der Oberfläche.

Erfindungsgemäß wird daher ein Verfahren zur Verfügung gestellt, das es im Falle wenig kompakter Formkörper, insbesondere mikroporöser Membranen mit einem Oberflächen/Massenverhältnis im Bereich bis zu 50 $m^2/g$, ermöglicht, wahlweise die Pfropfung über die gesamte Polymermatrix durchzuführen oder auf die außenliegenden Kettenbereiche des Basispolymeren zu beschränken.

Obwohl es bei kompakten Formkörpern in der Regel von geringerer Bedeutung ist, ob außer der reinen Oberflächenpfropfung auch noch eine Pfropfung tieferliegender Schichten des Basispolymeren erfolgt, ist es auch Aufgabe der Erfindung, die Eindringtiefe der Pfropfung auch im Falle der kompakten Formkörper zu regeln, weil dies in speziellen Fällen von Bedeutung sein kann. Dies ist beispielsweise dann der Fall, wenn das Basispolymer durch die Pfropfung über die gesamte Kettenlänge in ein lösliches Pfropfcopolymerisat überführt wird, so daß die gepfropfte Oberflächenschicht beim Kontakt mit einem entsprechenden Lösungsmittel entfernt würde.

Soweit die Erfindung eine Möglichkeit zur Erhöhung der chemischen Stabilität des Basispolymeren im Oberflächenbereich der Formkörper zur Verfügung stellt, ist darunter eine Erhöhung der Beständigkeit gegen Kettenabbau durch oxidativen und hydrolytischen Abbau sowie durch Strahlenschädigung zu verstehen. Insbesondere können mit dem erfindungsgemäßen Verfahren die labilsten Gruppierungen in der Hauptkette der Basispolymeren, wie die Peptid- bzw. die Carbamidsäuregruppe, im Oberflächenbereich in eine gegen den chemischen Angriff weniger anfällige Form überführt werden, um einen Kettenabbau und den damit verbundenen Verlust der typischen Eigenschaften des Basispolymeren zu vermeiden. Durch die Stabilisierung der Oberflächenschicht können auch die darunter liegenden, nichtstabilisierten Bereiche des Basispolymeren vor dem chemischen Angriff geschützt werden. Dadurch ist es nicht erforderlich, das gesamte Basispolymer des Formkörpers zu stabilisieren, so daß dessen mechanische Eigenschaften in diesem Bereich nicht verändert werden. Es ist eine wesentliche Leistung der Erfindung, die vorgenannten Stabilisierungseffekte ohne Verwendung von durch Lösungsmittel extrahierbaren Stabilisatoren zu erreichen.

Weiterhin bietet die Erfindung eine Möglichkeit zur Herstellung von Verbundkörpern, wobei der zur Pfropfung verwendete Formkörper oberflächlich mit einer Schicht des Pfropfpolymeren versehen ist, die mit dem Formkörper chemisch verbunden ist und im wesentlichen frei ist von Einzelketten des Basispolymeren, so daß die Quellungseigenschaften der Schicht des Pfropfpolymeren ausschließlich von der Art des für die Pfropfung verwendeten Monomeren bestimmt werden und sich somit in charakteristischer Weise von denen des Basispolymeren unterscheiden. Insbesondere sind darunter Pfropfpolymere zu verstehen, die eine hohe Quellbarkeit in wäßrigen Medien aufweisen, so daß sie, wenn sie mit chemischen Gruppen versehen werden, die sie zur reversiblen oder irreversiblen Bindung von bestimmten Zielsubstanzen befähigen, diesen chemischen Gruppen für die betreffenden Zielsubstanzen auch im Inneren dieser Schicht zugänglich sind. Bei den Zielsubstanzen kann es sich beispielsweise um Proteine handeln, bei den zur reversiblen Bindung befähigten Gruppen um ionische Gruppen oder Affinitätsliganden, bei den zur irreversiblen Bindung befähigten Gruppen um solche, die mit Amino- oder Sulfhydrylgruppen von Proteinen unter milden Bedingungen chemische Bindungen eingehen können und nach dem Stand der Technik bekannt sind. Dadurch, daß nicht nur die Oberfläche, sondern auch das Innere der aufgepfropften Polymerschicht für die Zielsubstanzen zugänglich ist, soll eine besonders hohe Bindungskapazität des Verbundmaterials erreicht werden.

Während die Anwendungsgebiete für vorstehend genannte Verbundmaterialen auf dem Gebiet der adsorptiven Stofftrennung liegen, betrifft ein weiteres Anwendungsgebiet der Erfindung den textilen Sektor. Die Zielsetzung bei der Herstellung der Verbundkörper besteht hier darin, die Formkörper, insbesondere Textilfasern, mit einer aufgepfropften Polymerschicht zu versehen, die sich färbetechnisch vom Basispolymeren in der gewünschten Weise unterscheidet. Ein Beispiel für einen derartigen Anwendungsfall liegt dann vor, wenn die aufgepfropfte Polymerschicht durch eine Klasse von Farbstoffen angefärbt werden soll, für die das Basispolymer entweder keine oder nur eine geringe Affinität besitzt. Dies ist textiltechnisch insbesondere dann wünschenswert, wenn Mischfasern in einem Arbeitsgang gefärbt werden sollen, z.B. Mischfasern aus Polyamiden und Baumwolle in einer Färbeflotte mit Reaktivfarbstoffen für Cellulose.

Weiter ermöglicht die Erfindung die gezielte Veränderung der Benetzungseigenschaften von Formkörpern, insbesondere in Richtung einer Erhöhung der Wasserbenetzbarkeit sowie der Benetzbarkeit durch Flüssigkeit von noch höherer Oberflächenspannung als der von Wasser, wie zum Beispiel von Elektrolytlösungen in hoher Konzentration. Diese Zielsetzung ist auf allen bisher genannten Anwendungsgebieten von Bedeutung. Neben einer Erhöhung der Wasserbenetzbarkeit besteht dabei auch die Aufgabe, ein Verfahren zur Herabsetzung des Adsorptionsvermögens für lipophile Substanzen zu schaffen, wobei im Falle von mikroporösen Membranen in erster Linie, aber nicht auschließlich, die Proteinadsorption herabgesetzt werden soll, im Falle der Textilfasern die Anschmutzung durch fettartige Stoffe. In beiden fällen ist eine Folge der Herabsetzung der Affinität für lipophile Substanzen, daß, wenn eine derartige Adsorption dennoch einmal stattgefunden hat, diese wieder leicht rückgängig gemacht werden kann. Im Falle der Textilfasern äußert sich dies darin, daß das Waschen unter wesentlich milderen Bedingungen erfolgen kann, als ohne eine derartige Modifizierung der Oberfläche. Ebenso werden Filtermembranen durch eine derartige Modifizierung nach Verstopfung leichter wieder freispülbar.

Die Erfindung erlaubt auch die Beeinflussung des Zeta-Potentials entweder in Richtung eines negativen oder eines positiven Potentials. Auch das Zeta-Potential hat sowohl bei Filtermaterialien als auch bei Textilien einen erheblichen Einfluß auf die Gebrauchseigenschaften, indem es, je nach den kontaktierenden Medien, die Verschmutzungseigenschaften bestimmt. In engem Zusammenhang mit dem Zeta-Potential steht auch die elektrostatische Aufladung der Formkörper, die durch das erfindungsgemäße Verfahren ebenfalls herabgesetzt werden kann, indem durch die Einführung von ionischen Gruppen in die Oberfläche die Oberflächenleitfähigkeit erhöht wird.

Schließlich ermöglicht es die Erfindung, im Falle wenig kompakter Formkörper, bei denen sich die Gesamtheit des Basispolymeren in einer oberflächennahen Schicht befindet, diesen Formkörper zur Gänze in ein Pfropfcopolymer umzuwandeln, wobei ein isotropes Wachstum dieses Formkörpers unter Erhaltung seiner ursprünglichen Form eintritt und der gepfropfte Formkörper sich in seinen chemischen und gegebenenfalls auch mechanischen Eigenschaften und/oder Löslichkeitseigenschaften in einer gewünschten Weise von dem Ausgangsprodukt unterscheidet. Neben einer Änderung der chemischen Stabilität können diese Eigenschaftsänderungen sowohl in einer erhöhten als auch einer verminderten Löslichkeit in bestimmten Lösungsmitteln bestehen. Hinsichtlich der mechanischen Eigenschaften kann sowohl eine Erhöhung der mechanischen Festigkeit als auch eine Erhöhung der Flexibilität erreicht werden.

Zur Regelung der Eindringtiefe der Pfropfungsreaktion ist es von entscheidender Bedeutung, die Bedingungen der Halogenierung und der Reduktion sowie die Pfropfdauer zu kontrollieren. Es wurde festgestellt, daß ein hoher Chlorierungsgrad vor der Pfropfung in Verbindung mit einem schwach negativen Redoxpotential während der Pfropfung bei kurzen Pfropfzeiten einem fortschreiten der Pfropfung in die Tiefe entgegenwirkt.

Die Erfindung beruht demgemäß auf der überraschenden Feststellung, daß eine umso stärkere Beschränkung der Pfropfung auf die äußeren Teile der Ketten des Basispolymeren erfolgt, je höher die Dichte an N-chlorierten Stickstoffatomen ist.

Zwar entzieht sich der Mechanismus, nach dem die Pfropfung im Falle hochhalogenierter Oberflächen auf eine dünnere Oberflächenschicht begrenzt wird, als im Falle niedriger halogenierter Oberflächen, gegenwärtig der wissenschaftlichen Erklärung. Es wird jedoch angenommen, daß eine hohe Dichte an halogenierten Stickstoffatomen den eigentlichen Pfropfvorgang bis zu einem gewissen Grad inhibiert. Diese Annahme stützt sich auf die Tatsache, daß die Anfangspfropfgeschwindigkeit im falle niedrig halogenierter Oberflächen zunächst wesentlich höher ist, als die von hoch halogenierten. Erst im Verlaufe einer längeren Pfropfdauer gleichen sich die Pfropfgrade von hoch- und niedrig halogenierten Oberflächen an. Nach diesem Zeitpunkt jedoch setzt sich die Pfropfung im falle der höher halogenierten Oberflächen weiter fort und kommt viel später zum Stillstand, als bei den niedrig halogenierten.

Daraus wird geschlossen, daß die ursprünglich hoch halogenierte Oberfläche zuerst in einer Induktionsphase teilweise enthalogeniert wird, bis die Halogendichte auf jenes Maß herabgesetzt ist, bei dem keine Inhibierung der Pfropfung mehr erfolgt. Dies trifft zunächst nur für die äußersten Polymerketten zu, während die darunter liegenden Ketten nach wie vor eine hohe Halogendichte aufweisen und die Pfropfung in der Tiefe zunächst noch inhibiert ist. Erst im Verlaufe der weiteren Pfropfdauer und damit längerer Einwirkung des Reduktionsmittels auf die weiter innen liegenden Ketten wird der Gradient der Halogenkonzentration abgebaut, so daß auch für diese die inhibierende Halogenkonzentration unterschritten wird. Eine Folge dieses Ablaufes ist, daß der Charakter der eigentlichen Oberflächenpfropfung mit steigender Pfropfdauer zunehmend zugunsten einer Innenpfropfung verloren geht.

Auch die Tatsache, daß ein weniger negatives Redoxpotential in Richtung einer reinen Oberflächenpfropfung wirkt, steht mit diesem Erklärungsversuch im Einklang, indem bei einem weniger reduzierenden Medium der Abbau des Halogengradienten langsamer erfolgt, als unter stark reduzierenden Bedingungen.

Aus bisher ebenfalls nicht restlos geklärten Gründen tritt eine Pfropfung in der Membranmatrix auch dann ein, wenn durch die weiteren erfindungsgemäß wesentlichen Maßnahmen, auf die nachfolgend noch eingegangen wird, eine ausschließliche, jedoch unvollständige Oberflächenhalogenierung stattgefunden hat. Ein denkbarer Mechanismus für diesen Vorgang könnte darauf beruhen, daß das im wäßrigen Medium mit dem Stickstoff-halogenierten Polymeren im Hydrolysegleichgewicht stehende Hypohalogenition bzw. unterhalogenige Säure in das Innere der Matrix wandert und dort primär zu einer Stickstoffhalogenierung führt. Eine andere Hypothese beruht darauf, daß eine Halogenübertragung in der festen Phase stattfindet, das heißt, daß infolge thermischer Schwingungen der Kettensegmente ein Halogenaustausch zwischen halogenierten und nichthalogenierten Polymerketten stattfindet.

Die bisherigen Ausführungen beziehen sich vorwiegend auf die Eindringtiefe der Pfropfung. Die Dicke der aufgepfropften Schicht, die wesentlich durch die Kettenlänge und Kettendichte des aufgepfropften Polymeren bestimmt wird, kann durch Wahl der Monomerkonzentration und die Pfropfdauer gesteuert werden, wobei eine hohe Monomerkonzentration sowohl die Kettenlänge und die Kettendichte erhöht, eine lange Pfropfdauer hingegen in erster Linie die letztere.

Die speziellen Eigenschaften des Pfropfpolymers werden im wesentlichen durch die Auswahl des betreffenden Monomeren bestimmt, was bei der detaillierten Beschreibung der Erfindung noch näher ausgeführt wird.

Art der Formkörper.

Die Art und Verwendung der Formkörper sind ebenso vielfältig wie die Anwendungsgebiete der für die erfindungsgemäße Pfropfung vorgesehenen Polymere. Es kann sich dabei entweder um kompakte Körper handeln, worunter solche zu verstehen sind, die eine in Relation zur Masse relativ kleine Oberfläche aufweisen. Beispiele dafür sind Platten, Rohre, Schläuche, Gefäße wie Flaschen u. dgl., aber auch Konstruktionsbauteile wie Zahnräder. Weniger kompakte Formkörper, die eine relativ große Oberfläche in Relation zur Masse aufweisen sind Folien, fasern oder Kapillaren. Fasern im Dickenbereich von 1-100 μm haben beispielsweise ein Oberflächen/Massenverhältnis etwa im Bereich von 0.4 bis 4 $m^2/g$. Faserige Formkörper können sowohl in Form von Textilfasern weiterverarbeitet sein zu Geweben, ebenso zu nichtgewebten, flächigen Gebilden wie Vliesen, die beispielsweise für Filtrationszwecke eingesetzt werden können.

Besonders eignet sich das erfindungsgemäße Verfahren für Formkörper, die ein extrem großes Verhältnis der Oberfläche zur Masse des Polymernen aufweisen, wie z.B. für mikroporöse Membranen zur Partikel- und Sterilfiltration, deren Basispolymer häufig aus Polyamiden oder Polysulfonamiden besteht. Das Oberflächen/Massenverhältnis kann bei derartigen porösen Formkörpern im Bereich zwischen 5 und 50 $m^2/g$ liegen. Die zwischen den Poren bestehenden Stege weisen daher nur sehr geringe Wandstärken auf, wobei typische Werte in der Größenordnung von einigen Hundertstel bis wenige Zehntel μm (Mikron) liegen. Mikroporöse Membranen lassen sich in Ultra- und Mikrofiltrationsmembranen einteilen. Die ersteren sind durch Porengrößen charakterisiert, die sie zur Rückhaltung von Makromolekülen, etwa im Molmassenbereich zwischen 500 und 1 000 000 Dalton befähigen, während die letzteren wirksame Porengrößen im Bereich zwischen etwa 0.01 und 10 μm aufweisen. Mikroporöse Membranen weisen entweder eine durchgehend mikroporöse Struktur auf oder eine mikroporöse Basisstruktur und eine an der Oberfläche befindliche, hautartige Schicht, die im technischen Sprachgebrauch als Skin bezeichnet wird. Diese Skin weist infolge des Fehlens von Mikroporen keine konvektive, sondern nur eine diffuse Permeabilität für den Stofftransport auf und ist daher für Stofftrennungen auf molekularer Basis geeignet. Typisehe technische Trennverfahren, die mit den letztgenannten, eine Skin aufweisenden Membranen durchgeführt werden können, sind die umgekehrte Osmose, die Gastrennung sowie die Pervaporation.

Eine weitere Gruppe von Formkörpern mit hohem Oberflächen-Massenverhältnis sind Schäume sowie mikroporöse, dampfdurchlässige Materialien, wobei ein Einsatzgebiet für die letzteren die Verwendung als Lederersatzstoff ist. In der Technik bevorzugte Polymere für die Herstellung derartiger Formkörper sind die Polyurethane. Schäume können sowohl offen-, als auch geschlossenzellig sein. Im ersten Fall ist nach der Erfindung eine Pfropfung an der gesamten, also auch der inneren Oberfläche des Schaumes vorgesehen, im anderen Fall nur an der äußeren Oberfläche.

Art der Polymere.

Zur Herstellung derartiger Formkörper können beispielsweise aliphatische Polyamide, wie Nylon 4, Nylon 6, Nylon 6,6 und höhere aliphatische Polyamide verwendet werden, aber auch aromatische Polyamide, die beispielsweise unter den Handelsnamen Nomex und Kevlar bekannt sind. Der Polymerklasse der Polyamide ist die wiederkehrende Struktureinheit der Peptidbindung gemeinsam:

-CO-NH-

Die Peptidbindung kann alleine oder auch in Verbindung mit anderen wiederkehrenden Struktureinheiten auftreten, wie z.B. in Kombination mit der Sulfongruppe:

$-SO_2-$

Polymere mit Peptidgruppen und Sulfongruppen sind als Polysulfonamide bekannt und können durch Polykondensation von Diaminodiarysulfonen mit aromatischer Dicarbonsäure hergestellt werden.

Eine weitere Gruppe von Polymeren, die aus denen die zur Pfropfung nach dem erfindungsgemäßen Verfahren verwendeten Formkörper hergestellt sein können, sind die Polyurethane. Die Polyurethane unterscheiden sich von den Polyamiden dadurch, daß sie anstelle der Peptidbindung die Carbamidsäuregruppe

-O-CO-NH-

aufweisen.

Zum Unterschied von den bisher genannten für das erfindungsgemäße Verfahren geeigneten Polymeren, die den Stickstoff in der Hauptkette enthalten, sind auch solche Polymere geeignet, die den Stickstoff in einer Seitenkette enthalten. Dabei kann es sich entweder um primäre oder sekundäre Aminogruppen handeln:

$-NH_2$ , -NHR

nicht aber um tertiäre Aminogruppen. Ebenso kann es sich bei den stickstoffhaltigen Gruppen der Seitenkette um primäre oder sekundäre Amidgruppen handeln:

$-CO-NH_2$ , -CO-NHR

Den für die Herstellung der erfindungsgemäßen Formkörper geeigneten Polymeren ist gemeinsam, daß sie am Stickstoff ein Wasserstoffatom aufweisen, das durch ein Halogenatom, insbesondere ein Chlor- oder Bromaton substituierbar ist.

Die für die Erfindung vorgesehenen Polymere weisen eine Reihe von Vorzügen auf, die zu ihrem breiten technischen Einsatz geführt haben. So sind viele Vertreter der Polyamide durch eine hohe mechanische Festigkeit und einen hohen Erweichungspunkt gekennzeichnet, während die Polyurethane sehr günstige elastische Eigenschaften aufweisen. Demgegenüber weisen diese Polymere für die praktische Anwendung gewisse Nachteile auf, die zum Teil auf die begrenzte Stabilität der Peptid- bzw. der Carbamidsäuregruppe zurückzuführen sind. Bin Abbau dieser Gruppen, beispielsweise durch hydrolytische, oxidative oder strahlenchemische Einflüsse führt zu nachteiligen Veränderungen der Eigenschaften, wodurch der Einsatzbereich der aus diesen Polymeren hergestellten Formkörper begrenzt wird.

Art der Monomeren.

Für die Anwendung der Erfindung sind einfach oder mehrfach ethylenisch ungesättigte Monomere geeignet, sofern sie eine, wenn auch geringe, Löslichkeit in überwiegend wäßrigen Systemen aufweisen. Unter überwiegend wäßrigen Systemen sind wäßrige Systeme zu verstehen, die außer dem Monomeren entweder keine weitere organische Komponente enthalten, oder ein wassermischbares Lösungsmittel in einer Konzentration, die jenes Maß nicht erreicht, das zur vollständigen Ausfällung von Natriumdithionit führt. Im Falle von Aceton als Lösungsmittel kann der Anteil beispielsweise bis zu 40 Gew.-% betragen.

Aus der Gruppe der einfach ethylenisch ungesättigten Monomere sind geeignet die ungesättigten Carbonsäuren, wie die Acryl- und die Methacrylsäure, sowie deren Ester und Amide, wobei es sich bei den Methacrylsäureestern und -amiden um besonders bevorzugte Vertreter handelt. Die verwendbaren Ester sind im einzelnen: Methylmethacrylat, Ethylmethacrylat, Hydroxyethylmethacrylat, Hydroxypropylmethacrylat, Dihydroxypropylmethacrylat sowie die entsprechenden Acrylate. Unter den Methacrylaten ferner: Glycidylmethacrylat, Trimethylammonium-2-hydroxypropylmethacrylatchlorid, Dimethylaminoethylmethacrylat, Diethylaminoethylmethacrylat, Diethylenglycolmethacrylat, Octaethylenglycolmethacrylat, Sulfopropylmethacrylat, 2-N-Morpholinoethylmethacrylat. Geeignete Monomere auf Amidbasis sind: Acrylamid, Dimethylaminopropylmethacrylamid, Methacrylamidopropyl-trimethylammoniumchlorid, 2-Acrylamido-2-methyl-propansulfonsäure, N-Acrylamidoglycolsäure, N-Morphpolinopropyl-methacrylamid, Methacrylamidoglycolatmethylether, N-Hydroxyethyl-methacrylamid, N-[tris-(hydroxymethyl)]-methyl-methacrylamid. Weitere geeignete, einfach ethylenisch ungesättigte Monomere sind: Vinylacetat, N-Vinylpyrrolidon, 4-Vinylpyridin, N-Vinylimidazol.

Die genannten Monomere sind sowohl alleine als auch im Gemisch anwendbar. Insbesondere ist es möglich, einfach und mehrfach ethylenisch ungesättigte Monomere in Kombination anzuwenden, wodurch die Aufpfropfung eines vernetzten Polymeren erreicht wird. Es können jedoch auch mehrfach ethylenisch ungesättigte Monomere alleine angewandt werden.

Geeignete mehrfach ethylenisch ungesättigte Monomere sind: Pentaerythritdimethacrylat, Glycerindimethacrylat, Tetraethylenglycoldimethacrylat, Tetraethylenglycoldiacrylat.

Pfropfpolymerisation.

Unter Pfropfpolymerisation versteht man eine Polymerisation, bei der auf eine Polymerkette eines einheitlichen Produktes eine Seitenkette aus einem oder mehreren anderen Monomeren aufpolymerisiert wird. Die Eigenschaften des erhaltenen Pfropfcopolymerisats, wie z.B. Löslichkeitsverhalten, Schmelzpunkt, Wasseraufnahme, Benetzbarkeit, mechanische Eigenschaften, Adsorptionsverhalten etc. weichen mehr oder weniger stark von denen des Ausgangspolymeren ab, je nach Art und Menge des oder aufpolymerisierten Monomeren. Je größer das Mengenverhältnis des aufgepfropften Polymeren im Verhältnis zum Basispolymeren ist, umso stärker überwiegen die Eigenschaften des ersteren.

Darüber hinaus werden die Eigenschaften des Pfropfcopolymerisats von der Stelle beeinflußt, an der die Pfropfung an dem Ausgangspolymeren erfolgt.

Pfropfpolymerisationen können sowohl in flüssiger Phase, also in der Schmelze oder Lösung, als auch in der festen Phase durchgeführt werden, wobei das Basispolymer im allgemeinen in einer gequollenen Form vorliegen muß, um den Zutritt des Monomeren zu den Ketten des Basispolymeren zu ermöglichen. Die Quellung kann entweder durch das Monomer selbst erfolgen, oder durch eine weitere Komponente, die an der Polymerisation selbst nicht beteiligt ist. Die Pfropfung schreitet in diesem Fall von der Oberfläche zum Inneren des Polymeren fort. Dabei kann der Fall eintreten, daß das entstehende Pfropfcopolymer im Pfropfmedium löslich ist, wodurch der Fortgang der Pfropfung beschleunigt wird, weil sich die Diffusionswege während der Pfropfung nicht verlängern.

Oberflächenpfropfung.

Unter Oberflächenpfropfung im Sinne der Erfindung ist zu verstehen, daß die Pfropfung auf den Oberflächenbereich des Formkörpers beschränkt wird. Es ist ein besonderer Aspekt der Erfindung, daß eine kontrollierte Oberflächenpfropfung ermöglicht wird, indem die Tiefenwirkung der Pfropfung durch besondere Maßnahmen kontrolliert werden kann.

Obwohl es sich bei dem erfindungsgemäßen Pfropfverfahren im wesentlichen um eine Oberflächenmodifizierung der Formkörper handelt, wobei die Eindringtiefe der Pfropfung auf wenige Hundertstel µm, vorzugsweise auf eine Schichtdicke von weniger als 0.1 µm beschränkt ist, kann bei weniger kompakten Formkörpern, die also ein sehr hohes Verhältnis von Oberfläche zu Masse aufweisen, so daß sich praktisch das gesamte Basispolymer in der Oberflächenzone befindet, im Extremfall das gesamte Basispolymer bei der Pfropfung umgesetzt werden, so daß nach Anwendung des erfindungsgemäßen Verfahrens der Formkörper einheitlich aus dem Pfropfcopolymerisat besteht. Dieser Fall wird zur Unterscheidung von der reinen Oberflächenpfropfung als Matrixpfropfung bezeichnet.

Bei der reinen Oberflächenpfropfung werden nur die unmittelbar an der Oberfläche des Formkörpers befindlichen Teile der Ketten des Basispolymeren gepfropft, so daß in jenen Fällen, in denen das entstehende Pfropfcopolymer bei vollständiger Pfropfung in ein im Pfropfmedium lösliches Pfropfcopolymer übergeführt würde, der ungepfropfte Teil der Polymerkette im Polymerverband verbleibt, so daß kein Ablösen des Pfropfcopolymers von der Oberfläche des Formkörpers möglich ist. Bei der reinen Oberflächenpfropfung sind daher auch solche Monomere verwendbar, die bei vollständiger Pfropfung zu löslichen Produkten führen würden. Im Fall der Matrixpfropfung ist die Anwendbarkeit der Monomere auf jene beschränkt, bei denen auch das entstehende Pfropfcopolymerisat unlöslich ist. Dies kann gegebenenfalls durch eine vernetzende Pfropfung unter Zugabe eines mehrfach ethylenisch ungesättigten Monomeren erreicht werden, wenn das für einen Anwendungsfall vorgesehene Monomer selbst diese Voraussetzung nicht erfüllt.

Die Matrixpfropfung nichtkompakter Formkörper ist dann erforderlich, wenn Bulk-Eigenschaften, wie z.B. Elastizität oder Flexibilität, die Löslichkeitseigenschaften oder die Beständigkeit gegen gamma-Strahlen verändert werden sollen. Sollen hingegen nur das Adsorptions- oder/und das Benetzungsverhalten beeinflußt und eine Änderung der mechanischen Eigenschaften sowie der Löslichkeit vermieden werden, ist es hingegen erforderlich, ein Fortschreiten der Pfropfung in die Tiefe des Polymeren, die Matrixpfropfung, zu verhindern.

Bei Matrixpfropfung nichtkompakter Formkörper ist das Ergebnis der Oberflächenpfropfung somit dasselbe, wie das, welches erhalten würde, wenn der betreffende Formkörper von vorneherein aus dem Pfropfcopolymer hergestellt worden wäre. Der Vorteil der nachträglichen Pfropfung besteht demgegenüber darin, daß vielfach für die Basispolymeren entsprechende Herstellungsverfahren bekannt oder möglich sind, während sie für das Pfropfcopolymer entweder nicht bekannt oder prinzipiell nicht durchführbar sind. So sind beispielsweise geeignete Verfahren zur Herstellung von mikroporösen Membranen aus Polyamiden oder Polysulfonamiden sowie zur Herstellung offenporiger Schäume aus Polyurethanen bekannt. Diese Techniken sind jedoch auf die entsprechenden Pfropfcopolymerisate nicht ohne weiteres anzuwenden. Wenn es sich bei den Pfropfcopolymerisaten um in gängigen Lösungsmitteln unlösliche Produkte handelt, sind diese Verfahren sogar prinzipiell nicht übertragbar.

Andererseits gibt es Fälle, in denen eine reine Oberflächenpfropfung, also scharfe Abgrenzung zwischen dem weitgehend unveränderten Basispolymer und dem aufgepfropften Polymer für den vorgesehenen Anwendungsfall der gepfropften Formkörper von entscheidender Bedeutung ist. Derartige Fälle liegen insbesondere dann vor, wenn das Basispolymer als Träger für das in einer dicken Schicht aufgepfropfte Polymer dienen soll und diese aufgepfropfte Schicht weitgehend frei sein soll von Ketten des Basispolymeren.

Ein wichtiges Beispiel für einen derartigen Fall liegt dann vor, wenn durch die Oberflächenpfropfung auf mikroporösen Membranen ein Verbundmaterial für adsorptive Stofftrennungen, wie z.B. den Ionenaustausch oder die Affinitätschromatographie hergestellt werden soll. Dabei kommt es im Interesse einer hohen Adsorptionskapazität, nicht nur darauf an, daß die gesamte innere und äußere Oberfläche von einer Schicht des aufgepfropften Polymeren überzogen ist, sondern auch darauf, daß diese Schicht eine bestimmte Dicke aufweist, weil die gesamte Schichtdicke des aufgepfropften Polymeren einen Beitrag zur Adsorptionskapazität liefert.

Bei derartigen Membranen für die adsorptive Stofftrennung ist es erforderlich, daß die zu adsorbierenden Substanzen, beispielsweise Proteine, in die aufgepfropfte Polymerschicht eindringen können. Obwohl dies nicht streng bewiesen werden kann, wird angenommen, daß hierfür die aufgepfropften Ketten in einem durch das angewandte Medium voll solvatisierbaren Zustand vorliegen müssen und daß zwischendurch vorhandene Ketten des Basispolymeren diesem Ziel abträglich sind.

Obige Deutung stützt sich auf die Beobachtung, daß bei identischen Ausgangsmembranen, gleichem Pfropfgrad und auf identische Weise eingeführten Affinitätsliganden wesentlich niedrigere Bindungskapazitäten für die zu adsorbierenden Substanzen gefunden werden, wenn die Pfropfung über die gesamte Schichtdicke erfolgt ist, als wenn die Pfropfung auf die oberflächennahen Kettensegmente des Basispolymeren beschränkt worden ist.

Eine Unterscheidung zwischen diesen beiden Arten der Oberflächenpfropfung, also zwischen Matrixpfropfung und reiner Oberflächenpfropfung, ist im Falle von mikroporösen Membranen durch den Vergleich der Durchflußcharakteristik und der äußeren Dimensionen vor und nach der Pfropfung möglich, sofern die für die Pfropfung verwendete Membrane unverstärkt, d.h. nicht mit einem Vlies oder Gewebe als Verstärkungsmaterial versehen ist. Erfolgt in diesem Fall eine Matrixpfropfung, so tritt ein isotropes Wachstum der Membranmatrix ein, d.h. es erfolgt, makroskopisch gesehen, sowohl ein Flächen- als auch ein Dickenwachstum

Da bei einem isotropischen Wachstum der Membranmatrix proportional auch die Poren mitwachsen, sinkt dabei zwar die Anzahl der Poren pro Flächeneinheit, ihre Größe nimmt aber dabei zu, so daß insgesamt eine Erhöhung der hydraulischen Permeabilität zu beobachten ist. Das Gegenteil tritt bei der reinen Oberflächenpfropfung ein, d.h. wenn die Pfropfung auf die oberflächennahen Kettensegmente des Basispolymeren beschränkt ist. Da die Membranmatrix selbst dabei ihre Dimensionen nicht verändert, sondern nur eine zusätzliche Schicht aufgepfropft wird, bleiben auch die äußeren Dimensionen konstant, und die aufgepfropfte Schicht führt zu einer Porenverengung, so daß die hydraulische Permeabilität der Membrane abnimmt.

Obwohl eine Unterscheidung zwischen diesen beiden Grenzformen der Oberflächenpfropfung auch auf polymerchemischem Wege denkbar ist, sind die dafür in Frage kommenden Methoden relativ kompliziert und das obengenannte Unterscheidungskriterium erscheint für die praktischen Belange der Membranmodifizierung ausreichend. Einschränkend ist allerdings festzustellen, daß dabei auch die Art des verwendeten Monomers von Einfluß ist. Handelt es sich dabei um ein Monomer, dessen Homopolymer in dem für die erwähnten Permeabilitätsmessungen verwendeten Medium löslich oder stark quellbar ist, so ist in jedem Fall, also auch bei Matrixpfropfung, eine Abnahme der Permeabiltät zu beobachten. In der Praxis hat sich gezeigt, daß bei der Pfropfung von Hydroxyethylmethacrylat ein in Wasser hinreichend wenig quellbares Pfropfpolymer entsteht, um obige Unterscheidungskriterien mit Wasser als Medium zur Bestimmung der hydraulischen Permeabilität anwendbar zu machen.

Die vorstehenden Ausführungen sind nicht in dem Sinn mißzuverstehen, daß bei den beiden Grenzformen der Oberflächenpfropfung eine Permeabilitätssteigerung oder -verminderung zwangsläufig meßbar sein muß. Es handelt sich dabei lediglich um qualitative Unterscheidungskriterien zwischen den beiden Grenzformen der Oberflächenpfropfung, die nur bei entsprechend hohen Pfropfgraden meßbar und außerdem von der Porengröße der Ausgangsmembranen abhängig sind. So ist die Erniedrigung der hydraulischen Permeabilität bei gleichem Pfropfgrad umso größer, je niedriger die Porengröße der Ausgangsmembrane ist. Als Anhaltspunkt kann angegeben werden, daß die genannten Unterscheidungskriterien bei Membranen der nominellen Porengröße von 0.2 μm bei Pfropfgraden von über 10 Gew.-% meßbar werden.

Sowohl bei der Matrixfropfung als auch bei der reinen Oberflächenpfropfung kann entweder ein hoher oder niedriger Pfropfgrad anzustreben sein. Da bei niedrigen Pfropfgraden die obigen Unterscheidungskriterien nicht anwendbar sind, hat es sich in diesen Fällen bei der Ausarbeitung der Pfropfbedingungen als zweckmäßig erwiesen, die Rahmenbedingungen zunächst bei hohen Pfropfgraden zu erarbeiten, um die Anwendbarkeit der genannten Unterscheidungskriterien sicherzustellen und den gewünschten Pfropfgrad anschließend unter sonst gleichen Bedingungen bei niedrigeren Monomerkonzentrationen einzustellen. Dabei kann, wenn das für die Pfropfung vorgesehene Monomer zu stark wasserquellbaren Produkten führt, so daß die hydraulische Permeabiltät für Wasser in jedem Fall absinkt, für die Permeabilitätsbestimmung auch ein nichtwäßriges Medium herangezogen werden.

In den Fällen, in denen für die Anwendung des durch Pfropfung herzustellenden Produktes eine relativ dicke Schicht an Pfropfpolymer erforderlich ist, wie zum Beispiel im Falle der Herstellung von Membranen für die adsorptive Stofftrennung, ist hingegen eine Minderung der hydaulischen Permeabilität unvermeidlich, so daß, um ein bestimmtes Mindestmaß an hydraulischer Permeabilität des Endproduktes zu gewährleisten, von einer entsprechend grobporigen Ausgangsmembrane ausgegangen werden muff. Die Relation von Ausgangsporösität, Pfropfgrad, Permeabilität und Bindungskapazität des Endproduktes kann dabei in dem Fachmann geläufiger Weise zur Optimierung variiert werden.

Dabei ist auch zu berücksichtigen, daß mit zunehmender Porengröße die innere Oberfläche einer mikroporösen Membrane zunimmt und zwar besonderes stark im Bereich bis zur nominellen Porengröße von 0.2 µm. Wenn man die Proteinadsorption der nichtmodifizierten Membrane als Maß der inneren Oberfläche heranzieht, so beträgt, die innere Oberfläche einer 0.1 µm-Membrane gleich 1 gesetzt, die relative innere Oberfläche bei 0.2 µm nur mehr 0.75. Bei 0.45 µm sinkt sie auf nur mehr 0.65, bei 0.8 µm auf 0.5 und beträgt bei 3.0 µm immer noch 0.43. Da sich die Dicke der aufgepfropften Schicht rechnerisch aus der aufgepfropften Masse geteilt durch die Oberfläche ergibt, ist somit bei identischen Pfropfgrad die Schichtdicke im Fall einer groben Ausgangsmembrane erheblich höher als bei einer feineren Ausgangsmembrane. Im Interesse kurzer Diffusionswege zur Erreichung einer günstigen Adsorptions- und Desorptionskinetik sind jedoch kurze Diffusionswege bei Membranen für adsorptive Stofftrennungen generell zu bevorzugen. Mit anderen Worten, bei der oben skizzierten Optimierungsvorschrift für die Pfropfung von Membranen für adsorptive Stofftrennungen sind neben den Größen Bindungskapazität und hydraulische Permeabilität auch die kinetischen Parameter mit einzubeziehen.

Eine generelle Anweisung für die Herstellung optimaler derartiger Produkte kann deshalb nicht gegeben werden, weil dieses Optimum je nach Anwendungsfall sehr unterschiedlich liegen kann. Soll die Zielsubstanz aus einem sehr großen Volumen einer sehr verdünnten Lösung gewonnen werden, sind hohe hydraulische Permeabilitäten in Verbindung mit einer hohen Adsorptionsgeschwindigkeit erforderlich. In diesem Fall ist es zweckmäßig, eine feinporige Ausgangsmembrane in Verbindung mit einem niedrigen Pfropfgrad zu wählen. Liegt hingegen die Zielsubstanz in relativ hoher Konzentration vor, gewinnt die Bindungskapazität gegenüber den kinetischen Gesichtspunkten an Bedeutung und groberporige Membranen mit hohem Pfropfgrad sind vorzuziehen.

Wenn durch die Oberflächenpfropfung nur eine Beeinflussung des Zeta-Potentials oder der Benetzbarkeit bzw. eine Herabsetzung der unspezifischen Adsorption erreicht werden soll, also nur die Oberfläche des Pfropfpolymeren, nicht aber sein Volumen wirksam wird, ist eine reine Oberflächenpfropfung in Verbindung mit dem für eine vollständige Oberflächenbelegung minimal erforderlichen Pfropfgrad anzustreben.

Die Halogenierungsmittel.

Als Halogenierungsmittel sind anorganische und organische Chlor- und Bromverbindungen geeignet, in denen das Halogen mit der Oxidationszahl +1 auftritt. Anorganische Halogenierungsmittel sind Hypochloritund das Hypobromition bzw. die entsprechend dem angewandten pH-Wert damit im Gleichgewicht stehende unterchlorige und unterbromige Säure. Unter den organischen Chlorierungsmitteln sind t-Butylhypochlorit sowie organische N-Chlorverbindungen zu nennen, namentlich Chloramin T und Dichlorisocyanursäure. Die Eignung der Halogenierungsmittel für das erfindungsgemäße Verfahren wird im folgenden im Zusammenhang mit der Pfropfung von mikroporösen Membranen diskutiert, weil es sich dabei um den kritischsten Anwendungsfall handelt und sich daraus ergebende Schlußfolgerungen für andere, kompaktere Formkörper für den Fachmann offensichtlich sind.

Unter Verwendung von anorganischen und organischen Hypochloriten ist es bei entsprechend langer Einwirkungszeit möglich, beispielsweise Nylon 6,6-Membranen quantitativ zu chlorieren, d.h. den theoretischen Chlorgehalt von N-Cl-Nylon von etwa 24 Gew.-% zu erreichen. Demgegenüber tritt die erfindungsgemäße Oberflächenpfropfung schon bei wesentlich niedrigeren Chlorgehalten, etwa in der Größenordnung von 5-10 % dieses Wertes auf. Ein gewisser Nachteil der im Falle von wäßrigen Hyochloritlösungen für die Oberflächenpfropfung erforderlichen hohen Chlorgehalte besteht darin, daß einerseits die Schädigung der Membranmatrix durch oxidative Nebenreaktionen, insbesondere bei pH-Werten über 6, umso höher wird, je höher der Chlorierungsgrad gewählt wird, andererseits aber nur ein winziger Bruchteil des eingeführten Chlors für die Pfropfung verbraucht wird. Wenn der nach der Pfropfung verbleibende Restchlorgehalt nicht durch einen eigenen Reduktionsschritt wieder vollständig entfernt wird, führt er bei der Lagerung des Materials zu einer vollständigen Zerstörung der Membrane.

In zweckmäßiger Weise wird daher zur Durchführung des erfindungsgemäßen Verfahrens der Chlorüberschuß für die Oberflächenpfropfung auf das absolute Mindestmaß beschränkt, was dadurch gelingt, daß die Chlorierung vorzugsweise in wäßrigem Medium mit einem wasserlöslichen, organischen Stickstoffhalogenderivat, insbesondere Stickstoffchlorderivat mit hoher Molmasse und möglichst niedriger Hydrolysenkonstante durchgeführt wird. Typische derartige Stickstoffhalogenderivate sind N-Chlorderivate von Amiden und Sulfonamiden, wie sie in "Ullmanns Encyclopädie der Technischen Chemie", 3. Auflage, Band 5, auf den Seiten 382 bis 388 beschrieben sind. Ein typischer Vertreter dieser Gruppe von Verbindungen ist Chloramin T, das Natriumsalz des N-Chlor-p-toluolsulfonamids mit einem Formelgewicht von 230 und einer Hydrolysekonstante von etwa $10^{-8}$.

Ein hohes Molgewicht ist deshalb von Vorteil, weil dadurch die Diffusion in der Polymermatrix herabgesetzt und die Chlorierung auf einen oberflächennahen Bereich der Membranmatrix beschränkt wird. Die niedrige Hydrolysekonstante ist von Bedeutung, weil dadurch die Konzentration des im Hydrolysegleichgewichts vorhandenen anorganischen Hypochlorits bzw. der unterchlorigen Säure entsprechend niedrig ist. Je höher aber die Konzentration an unterchloriger Säure ist, umso mehr Chlor wird auch im Inneren der Membranmatrix gebunden.

Der zeitliche Verlauf der Chlorierung von Membranen mit Chloramin T unterscheidet sich in charakteristischer Weise von derjenigen mit wäßrigem Hypochlorit. Während im letzteren Falle ein stetiger Anstieg des Chlorgehaltes über einen langen Zeitraum festzustellen ist, bis der theoretische Gehalt bei vollständiger Chlorierung erreicht ist, zeigt sich im Falle von Chloramin T, daß schon bei einer Chlorierungsdauer in der Größenordnung von einer Sekunde etwa 50 % des innerhalb von 10 min erreichbaren Chlorgehaltes aufgenommen wird. Bei längeren Chlorierungszeiten wurde überraschenderweise festgestellt, daß bei mit Chloramin T chlorierten Membranen schon bei diesen geringen Chlorgehalten die Charakteristika für reine Oberflächenpfropfung festzustellen waren, die bei Hypochlorit-chlorierten Membranen erst bei um Größenordnungen höheren Chlorgehalten erreichbar waren.

Dabei zeigte sich aber auch, daß in Abhängigkeit vom Chlorgehalt bzw. von der Chlorierungsdauer sehr charakteristische Unterschiede im Pfropfverlauf mit der Zeit auftreten. Während beispielsweise nach einer Chlorierungsdauer von 5 Sekunden in wäßriger Chloramin T-Lösung ein Gesamtchlorgehalt in der Membran von 0.025 % gefunden wird, liegt er bei einer Chlorierungsdauer von 10 min bei 0.05 %. Dennoch ist die Pfropfgeschwindigkleit, d.h. die Gewichtszunahme bei der Pfropfung in Abhängigkeit von der Zeit in der Anfangsphase der Pfropfung, im ersteren Falle, also bei niedrigem Chlorgehalt, wesentlich höher als im zweiten Fall. Erst wenn man den Pfropfvorgang über mehrere Stunden ausdehnt, liegt der Pfropfgrad der höher chlorierten Membranen wesentlich höher als derjenige der niedriger chlorierten. So kann beispielsweise der doppelte Chlorgehalt nach 22 Stunden zum fünffachen Pfropfgrad führen.

Es ist zwar schwierig, eine Erklärung für die Abhängigkeit der Pfropfkinetik vom Chlorierungsgrad zu finden, eindeutig sind jedoch die Auswirkungen auf die Oberflächenpfropfung, wobei; wie bereits erwähnt, geringes Flächenwachstum unverstärkter Membranproben sowie ein hoher Rückgang der Durchflußleistung als Kriterium für die Oberflächenpfropfung dienen. So zeigt es sich, daß bei den niedrig chlorierten Membranen von vorneherein, wenn überhaupt, ein geringer Rückgang der hydraulischen Permeabilität und ein großes Flächenwachstum festzustellen sind, während bei den hochchlorierten zunächst in Relation zum Pfropfgrad eine starke Durchflußminderung und ein geringes Flächenwachstum auftritt. Nach einer bestimmten Periode wird ein Minimum der hydraulischen Permeabilität erreicht, das in einem typischen Fall einem Drittel der Anfangspermeabilität entspricht. Danach steigt die Permeabilität wieder an, was von einer sprunghaften Zunahme des Flächenwachtums begleitet wird.

Dies läßt sich in der Weise deuten, daß bei einer niedrigen Halogenierung, insbesondere Chlorierung mit einem Stickstoffderivat wie Chloramin T neben der Oberflächenpfropfung auch eine Pfropfung in der Matrix auftritt, während bei hohem Chlorgehalt (dies ist relativ, denn bei der Chlorierung mit anorganischem Hypochlorit sind zur Erzielung dieses Effektes um 1 bis 2 Größenordnungen höhere Chlorgehalte erforderlich) in der Anfangsphase die reine Oberflächenpfropfung auftritt, die allerdings im weiteren Pfropfverlauf von der Pfropfung in der Matrix überlagert wird. Der Mechanismus, welcher dem Einsatz von Stickstoffhalogenderivaten mit hoher Molmasse und niedriger Hydrolysekonstante als Halogenierungsmittel zugrunde liegt, scheint der zu sein, daß diese Halogenierungsmittel auf Grund ihres niedrigen Diffusionskoeffizienten in der Polymermatrix nur imstande sind, eine sehr dünne Oberflächenschicht des Polymeren zu halogenieren, und zwar vollständig, wenn die Einwirkungszeit lange genug gewählt wird. Dabei treten in dieser dünnen hochhalogenierten Schicht dieselben Effekte auf, wie wenn mit anorganischen Hypochloriten die gesamte Membranmatrix hochhalogeniert wird. Da dabei jedoch bei der anschließenden erforderlichen Reduktion des Restchlorgehaltes nur eine Oberflächenschicht reduziert werden muß, wird nicht nur dieser Folgeschritt erheblich rascher bewerkstelligt, sondern es kann auch nur, wenn überhaupt, eine viel geringere Schädigung der Membranmatrix eintreten.

Unter den Chlorierungsbedingungen ist in erster Linie der pH-Wert der Chlorierungsflotte von Bedeutung, wobei generell gesagt werden kann, daß die Schädigung des Basispolymeren umso höher ist, je höher der pH-Wert, insbesondere bei Werten über 9. Auch sinkt die Chlorierungsgeschwindigkeit mit steigendem pH-Wert. Der bevorzugte pH-Bereich ist daher zwischen 5 und 7, wobei Werte um 6 besonders bevorzugt werden. Im Falle von Chloramin T scheint ein Wert von 6,3 besonders vorteilhaft zu sein, weil darunter die Wasserlöslichkeit des Produktes stark abnimmt. Der bevorzugte Konzentrationsbereich für Chloramin T liegt zwischen 0.1 und 3 %, wobei Werte zwischen 1 und 2 % besonders bevorzugt werden.

Die Chlorierungszeiten mit Chloramin T können zwischen 1 sec und 10 min liegen, wobei die niedrigen Zeiten, vorzugsweise 2 bis 10 sec, bevorzugt werden, wenn Matrixpfropfung beabsichtigt ist. Allerdings ist für die Matrixpfropfung eine niedrige Chlorierung mit anorganischen Hypochloriten im allgemeinen vorzuziehen. Zur Erzielung der reinen Oberflächenpfropfung werden die langen Chlorierungszeiten mit Chloramin T und entsprechenden anderen chlorierten Organostickstoffverbindungen hohen Molgewichts bevorzugt, wobei typische Werte zwischen 0.5 und 10 min liegen können und vorzugsweise Zeiten zwischen 1 und 5 min angewandt werden.

Mit anorganischen Hypochloriten liegen die bevorzugten Konzentrationen bei 0.05 bis 3 % Aktivchlor, wobei der Bereich 0.1 - 0.5 % besonders bevorzugt wird. Die Chlorierungszeiten zur Bewirkung einer Matrixpfropfung liegen bei 30 sec bis 5 min, vorzugsweise bei 1 bis 2 min. Für die Bewirkung einer reinen Oberflächenpfropfung wird die Chlorierung mit anorganischen Hypochloriten zwar weniger bevorzugt, sie wird jedoch ermöglicht bei Chlorierungszeiten zwischen 5 und 15 min, vorzugsweise bei etwa 10 min.

Die Chlorierung kann auch mit organischen Hypochloriten in organischen Lösungsmitteln, wie z.B. t-Butylhypochlorit mit Methylenchlorid, Hexan und anderen inerten organischen Lösungsmitteln erfolgen, wobei die Art des Lösungsmittels einen erheblichen Einfluß auf die Chlorierungsgeschwindigkeit und den erreichbaren Chlorgehalt hat. Es scheinen dabei solche Lösungsmittel, die ein Quell- oder Lösungsvermögen für das entstehende N-Cl-Derivat aufweisen, wie z.B. chlorierte Kohlenwasserstoffe und Aromaten, zu höheren Chlorgehalten zu führen. Umgekehrt dürfen bei Verwendung dieser Lösungsmittel die Chlorierungszeiten nicht beliebig ausgedehnt werden, weil sonst das Material in Lösung gehen kann. Aliphatische Kohlenwasserstoffe hingegen führen zu niedrigen Chlorgehalten, wobei die Verhältnisse in diesem Fall ähnlich zu liegen scheinen, wie bei der Chlorierung mit Chloramin T. Insgesamt wird jedoch diese Chlorierungsmethode weniger bevorzugt, nicht zuletzt deshalb, weil es sich bei den organischen Hypochloriten um relativ teure und wasserempfindliche Substanzen handelt und ein Vorteil gegenüber beispielsweise Chloramin T nicht ersichtlich ist.

Alternativ zu der Chlorierung mit anorganischen Hypochloriten können auch organische Hypobromite verwendet werden. In einer speziellen Verfahrensvariante kann das Hypobromit in situ erzeugt werden, indem der zu bromierende Formkörper nacheinander einer Brom- und Ammoniakatmosphäre ausgesetzt wird. Nach der sofortigen Braunfärbung infolge von Adsorption von elementarem Brom aus der Gasphase erfolgt in der Ammoniakatmosphäre eine ebenso spontane Entfärbung unter Bildung des Hypobromits. Dieses Verfahren wird bei Verfahrensvarianten bevorzugt, wenn eine nachfolgende Bildung von Homopolymerisat in der Pfropfflotte nicht stört, weil in diesem Fall auf die Nachwässerung nach der Halogenierung verzichtet werden kann und die Gasphasenmethode somit insgesamt den Vorteil aufweist, daß ohne flüssige Medien halogeniert wird und der halogenierte Formkörper somit in einem unbenetzten Zustand in das Pfropfmedium eintreten kann.

Die Entfernung des Resthalogengehaltes aus der Oberfläche der gepfropften Formkörper ist prinzipiell mit einer breiten Palette von Reduktionsmitteln möglich und erfolgt am schnellsten mit einer wäßrigen Lösung von Natriumborhydrid, welches jedoch wegen der dabei erfolgenden Wasserstoffentwicklung aus Sicherheitsgründen nicht bevorzugt wird. Weitere geeignete Reduktionsmittel sind wäßrige Lösungen von Natriumhydrogensulfit, Hydrazin, Eisen-II-Salzen, Rongalit bei Temperaturen über 40 °C, Ascorbinsäure bei pH-Werten über 9 sowie Natriumdithionit. Letzteres ist das bevorzugte Reduktionsmittel und wird im pH-Bereich zwischen 5 und 9 angewandt, vorzugsweise bei pH=6-7. Die Konzentration kann 0.1-5 % betragen, wobei ein Bereich zwischen 1 und 2 % bevorzugt wird.

<u>Die Reduktionsmittel.</u>

Das bevorzugte Reduktionsmittel für die Anwendung des erfindungsgemäßen Verfahrens ist Natriumdithionit sowie dessen Folgeprodukte, wie z.B. Rongalit. Andere Reduktionsmittel wie Hydrazin oder Ascorbinsäure, letztere im alkalischen Bereich, sind ebenfalls einsetzbar, werden jedoch weniger bevorzugt.

Ein erfindungsgemäß geeignetes Reduktionsmittelsystem ist in der Literatur im Zusammenhang mit redoxinitiierten Polymerisationen beschrieben (R.W. Brown, C.V. Bawn, E.B. Hansen, L.H. Howland in "Ind. Eng. Chem." 46, 1073-1080 (1954) und besteht aus einer Kombination von EDTA-komplexiertem $Fe^{2+}$ mit Rongalit bei etwa pH=10. Rongalit Selbst ist bei Raumtemperatur für das erfindungsgemäße Verfahren weitgehend unwirksam, wohl aber bei Temperaturen ab 40-50 °C, wo es ein ausreichendes Redoxpotential entwickelt. Rongalit, das technisch als Dithionit mit Formaldehyd hergestellt wird, scheint auf ganz ähnliche Weise wirksam zu sein wie Dithionit selbst, wobei der Zusatz der komplexierten Fe-Ionen ebenso wie die Temperaturerhöhung im wesentlichen die Freisetzung des Dithionits zu bewirken scheinen.

Bei Einsatz des erfindungsgemäßen Verfahrens zur Beeinflussung der Eindringtiefe der Pfropfung haben nicht nur die Halogenierungsbedingungen einen wesentlichen Einfluß auf die Oberflächenpfropfung, d.h. die Erzielung von Matrixpfropfung oder reiner Oberflächenpfropfung, sondern auch das Reduktionsmittel, dessen Konzentration, der pH-Wert und das Redoxpotential in Verbindung mit dem verwendeten Monomeren. Dabei ist darauf hinzuweisen, daß es nicht auf das Redoxpotential alleine ankommt, d.h. daß es nicht gleichgültig ist, mit welchem Reduktionsmittel ein bestimmtes Redoxpotential eingestellt wird oder mit welchem pH-Wert es bei einem bestimmten Reduktionsmittel erreicht wird, sondern es liegt eine Abhängigkeit von jeder dieser Größen (die sich bereichsmäßig nicht spezifizieren lassen) vor, die jedoch durch einfache Vorversuche ermittelt werden kann.

Die Anwendung eines stark negativen Redoxpotentials (hohes Redoxpotential) wirkt sich generell in der Richtung aus, daß die Matrixpfropfung begünstigt wird, während ein niedriges Redoxpotential den Anteil an Matrixpfropfung zurückdrängt und somit die reine Oberflächenpfropfung bevorzugt. Damit überhaupt eine Pfropfung eintritt ist im Falle von Natriumdithionit als Reduktionsmittel ein Redoxpotential von mindestens etwa -100 mV erforderlich. Die Pfropfgeschwindigkeit zu Beginn der Pfropfung steigt mit dem Redoxpotential bis etwa -400 mV an. Je höher jedoch das Potential ist, umso geringer ist der Endpfropfgrad bei langen Pfropfzeiten (nach mehreren Stunden). Letzteres ist wahrscheinlich dadurch zu erklären, daß die Wahrscheinlichkeit der Reduktion ohne Pfropfung bei hohem Reduktionspotential zunimmt.

Da bei der technischen Ausführung des erfindungsgemäßen Verfahrens auch die Reaktionsgeschwindigkeit für die Wirtschaftlichkeit eine große Rolle spielt, ist das zu wählende Redoxpotential ein wesentliches Optimierungskriterium, wobei durch dem Fachmann geläufige Versuchsreihen festgestellt werden kann, wie hoch das Redoxpotential zu wählen ist, ohne daß im konkreten Fall ein störendes Ausmaß an Matrixpfropfung eintritt. Das Potential wird also in zweckmäßiger Weise in diesem Rahmen möglichst hoch gewählt, damit bei einer möglichst hohen Produktionsgeschwindigkeit gearbeitet werden kann.

Zur Durchführung des erfindungsgemäßen Verfahrens unter Verwendung von Natriumdithionit als Reduktionsmittel wird ein pH-Bereich von 6-10 bevorzugt, wobei der besonders bevorzugte Bereich zwischen 7.5 und 8.5, namentlich bei 8 liegt. Die Konzentration des Natriumdithionits kann zwischen 0.02 und 1 % liegen, wobei in jenen Ausführungsformen der Erfindung, in denen die Matrixpfropfung verhindert werden soll, die unteren Konzentrationsbereiche bevorzugt werden. Wenn dabei ein Pfropfbad über längeren Zeitraum benutzt wird, kann das Redoxpotential während der Pfropfung potentiometrisch bestimmt und über die Zudosierung eines Natriumdithionitkonzentrates konstant gehalten werden. Typische Werte für ein geeignetes Redoxpotential liegen zwischen -100 und -700 mV, bevorzugt zwischen -100 und -500 mV, insbesondere zwischen -200 und -300 mV. Die Auswahl eines geeigneten Redoxpotentials läßt sich durch einige Vorversuche ermitteln. Vorzugsweise wird ferner ein konstanter pH-Wert eingehalten, der durch ein entsprechend gepuffertes Pfropfmedium oder ebenfalls über Zudosierung von Lauge erreicht werden kann.

Ursache der erhöhten chemischen Beständigkeit.

In jenen Fällen, in denen sich das Stickstoffatom in der Hauptkette des Basispolymeren befindet, wie bei den Polyamiden und Polyurethanen, tritt bei der Einwirkung von Luftsauerstoff in der Hitze eine oxidative Spaltung der Peptid- bzw. Carbamidsäuregruppe ein, die eine Verminderung der Kettenlänge und somit einen Abbau des Polymeren bewirkt. Diese Reaktion ist begleitet von einem Verlust an mechanischer Festigkeit sowie einer Versprödung. Außerdem kann eine braune Verfärbung auftreten, die bei vielen Anwendungsfällen unerwünscht ist. In gleicher Weise erfolgt ein Kettenabbau auch bei einem hydrolytischen Angriff sowie bei der Einwirkung von elektromagnetischer Strahlung, insbesondere von UV- und gamma-Strahlung.

Die Erhöhung der chemischen Beständigkeit der Oberflächenschicht der Formkörper wird erfindungsgemäß überraschenderweise dadurch erreicht, daß die Aufpolymerisation des Monomeren gezielt am Stickstoffatom des Basispolymeren erfolgt, so daß die Wasserstoffatome am Stickstoff ganz oder teilweise durch die aufgepfropfte Polymerkette substituiert werden. Die entstehenden N-substituierten Derivate des Basispolymeren stellen somit im Falle der Polyamide und Urethane völlig neue Klassen von Polymeren dar, indem sie nicht mehr die typischen Peptid- bzw. Carbamidsäuregruppe aufweisen, sondern sekundäre Amidgruppen bzw. N-substituierte Carbamidsäuregruppen in der Hauptkette. Infolge des Fehlens eines Wasserstoffatoms am Stickstoff und/oder der durch die Substitution bewirkten sterischen Hinderung und der damit einhergehenden verminderten Reaktionsfähigkeit dieser Gruppen wird die für die Ausgangspolymeren typische Hydrolyse- und Oxidationsanfälligkeit sowie auch die Strahlenempfindlichkeit entscheidend herabgesetzt.

Oxidationsbeständigkeit.

Die Oxidationsempfindlichkeit der Basispolymeren hat dazu geführt, daß nach dem Stand der Technik eine Stabilisierung durch einen Zusatz von Antioxidantien erfolgt, wenn die daraus hergestellten Formkörper für den Einsatz bei höheren Temperaturen in Gegenwart von Luftsauerstoff vorgesehen sind. Aber auch in solchen Fällen, in denen der Einsatz der Formkörper bei hohen Temperaturen keine Rolle spielt, kann es erforderlich sein, diese bei hohen Temperaturen zu behandeln, beispielsweise zu Reinigungs-oder Sterilisationszwecken.

Die Sterilisation bei hohen Temperaturen spielt eine große Rolle bei Formkörpern, die auf medizinischem Gebiet oder in der pharmazeutischen oder verwandten Industrien eingesetzt werden. Häufig verwendete Sterilisationsverfahren beruhen beispielsweise auf dem Autoklavieren oder auf dem Bedampfen mit Wasserdampf bei bis zu über 140 °C. Während beim Autoklavieren, sachgemäße Bedienung des Autoklaven vorausgesetzt, die Anwesenheit von restlichem Luftsauerstoff im allgemeinen eine geringere Rolle spielt, ist bei der Bedampfung ein Sauerstoffausschluß, besonders in der Anfangsphasae, nicht zu gewährleisten.

Die Anwendung von Antioxidantien hat, obwohl es sich um eine wirksame Maßnahme zur Vermeidung des oxidativen Abbaus handelt, schwerwiegende Nachteile. Einerseits ist der Schutz, der dadurch erreicht wird, nur ein vorübergehender, weil das Antioxidans durch Oxidation verbraucht wird oder auf eine andere Weise aus dem Formkörper verschwinden kann. Dies tritt insbesondere bei Extraktion durch flüssige Medien ein, die sich bei der Anwendung des Formkörpers mit diesem in Kontakt befinden. Die Entfernung des Antioxidans aus dem Formkörper kann bei hohen Temperaturen auch über die Gasphase (Verdunstung, Sublimation) erfolgen, weil es sich um durchwegs relativ niedermolekulare Substanzen handelt, die einen gewissen Dampfdruck aufweisen.

Wenn das Antioxidans durch das mit dem Formkörper in Kontakt befindliche Medium extrahiert wird, ist nicht nur eine Verminderung bzw. Verschwinden des Oxidationsschutzes die Folge, sondern auch eine Kontaminiereung des Mediums. Zwar kann es sich dabei um Substanzen sehr geringer Wasserlöslichkeit handeln, so daß sich die Existenz des extrahierten Antioxidans im Medium kaum nachweisen läßt. In den für die Anwendung der Formkörper in Frage kommenden Industriezweigen, z.B. der pharmazeutischen oder Nahrungsmittelindustrie, werden jedoch auch häufig nichtwäßrige Medien, wir z.B. solche auf Basis von Alkoholen eingesetzt. Es läßt sich nachweisen, daß auf herkömmliche Weise durch Antioxidantien stabilisierte Formkörper, wie z.B. mikroporöse Membranen, nach Behandlung mit Ethanol keine wirksame Stabilisierung aufweisen, wodurch die Alkoholextrahierbarkeit dieser Antioxidantien unmittelbar nachzuweisen ist.

Die Kontamination der Medien mit Antioxidantien, bei denen es sich meist um vielfältig substituierte Phenolderivate handelt, ist auch dann als in höchstem Grade unerwünscht zu bezeichnen, wenn unmittelbare toxische oder in sonstiger Weise bedenkliche Nebenwirkungen dieser Substanzen nicht bekannt sind.

Es ist bekannt, daß auch Substanzen extrem niedriger Wasserlöslichkeit durch wäßrige Medien aus Polymeren extrahiert werden, wenn diese wäßrigen Medien Komponenten enthalten, die zur Emulgierung oder sonstiger Bindung von lipoidlöslichen Substanzen befähigt sind. Dies ist insbesondere bekannt von Weichmachern, wie sie bei der Verarbeitung von verschliedenen Kunststoffen verwendet werden. Typische wäßrige Medien, die zur Extraktion von lipoidlöslichen Substanzen aus Polymeren befähigt sind, stellen Proteinlösungen dar, wie z.B. Serum, Blutplasma oder Lösungen von Serumproteinen, wie sie bei der Fraktionierung von Blutplasma auftreten. Diese Medien werden vielfach zum Zwecke der Sterilisation durch mikroporöse Membranen aus den genannten Polymeren, insbesondere solchen aus Polyamiden filtriert und können durch darin befindliche Antioxidantien kontaminiert werden.

In einem weitern speziellen Fall, bei Textilfasern auf Basis von Polyamiden, kommt die Stabilisierung mit Antioxidantien deshalb nicht in Frage, weil die beim Waschen von Textilien üblichen tensidhaltigen Waschflotten ebenfalls zu einer Extraktion von Antioxidantien führen würden, so daß ihre Wirksamkeit auf die Zeit des Erstgebrauchs beschränkt wäre oder nach jedem Waschvorgang eine Neubehandlung mit Antioxidans erforderlich wäre. Besonders störend macht sich die Oxidationsempfindlichkeit von Textilfasern aus Polyamiden durch ein Vergilben bei hohen Temperaturen bemerkbar.

Im Falle von mikroporösen Membranen wirkt sich der oxidative Abbau in einem rapiden Abfall der mechanischen Festigkeit aus. Werden z.B. nicht oxidationsstabilisierte Nylonmembranen 1 Stunde lang bei 140 °C in Gegenwart von Luftsauerstoff autoklaviert, sinkt die Festigkeit (gemessen als Berstdruck) auf nahezu null. Erfindungsgemäß gepfropfte Membranen hingegen erleiden bei mehr als einstündigem Autoklavieren unter den geannten Bedingungen keinen meßbaren Festigkeitsverlust im Sinne einer Abnahme des Berstdrucks. Zum Unterschied von mit Antioxidantien stabilisierten Membranen bleibt diese Beständigkeit gegen den oxidativen Abbau auch dann erhalten, wenn die Membran vor dem Autoklavieren mit einem üblichen Extraktionsmittel für Antioxidantion wie z.B. Ethanol extrahiert wird.

Hydrolysebeständigkeit.

Zwar weisen beispielsweise aliphatische und aromatische Polyamide eine relativ hohe Alkalibeständigkeit auf, doch ist die Hydrolysebeständigkeit dieser Polymeren im sauren Bereich als gering zu bezeichnen. Die Hydrolysebeständigkeit der Polyurethane ist sowohl im sauren als auch alkalischen Bereich für viele Anwendungsfälle unzureichend. Polysulfonamide weisen ebenfalls eine niedrige Hydrolysebeständigkeit sowohl im sauren als auch alkalischen Milieu auf. Der hydrolytische Angriff auf die Formkörper kann sowohl bei ihrem bestimmungsgemäßen Einsatz erfolgen, wenn wäßrige Medien hoher oder tiefer pH-Werte und/oder hoher Temperaturen einwirken können, oder aber auch bei der Dampfsterilisation bzw. dem Autoklavieren.

Der hydrolytische Abbau von Formkörpern, die auf medizinischem oder pharmazeutischem Gebiet sowie verwandten Gebieten eingesetzt werden, ist nicht nur wegen der bereits erwähnten Herabsetzung der mechanischen Festigkeit schädlich. Auch hier besteht ein Kontaminationsrisiko, indem Hydrolyseprodukte der Polymeren, wie z.B. Hexamethylendiamin und Adipinsäure im Falle von Nylon 6,6 ebenso wie auch Oligomere in das Medium gelangen können.

Die Erhöhung der Hydrolysebeständigkeit durch Anwendung des erfindungsgemäßen Verfahrens ist insbesondere deshalb besonders bedeutungsvoll, weil andere Methoden zum Schutz der Basispolymeren gegen hydrolytischen Abbau, entsprechend den Antioxidantien gegen den oxidativen Abbau, technisch nicht zur Verfügung stehen. Da die Hydrolyse von Formkörpern, ebenso wie die Oxidation, an der Oberfläche angreift, kann durch Pfropfung an der Oberfläche ein sehr weitgehender Schutz erreicht werden.

Strahlenbeständigkeit.

Das Gleiche gilt auch für den Schutz gegen den Angriff ultravioletter Strahlung. Ähnlich wie bei den Antoxidantien erübrigt sich durch die Anwendung des erfindungsgemäßen Verfahrens der Einsatz von UV-Stabilisatoren.

Die Beständigkeit gegen gamma-Strahlung ist deshalb von erheblicher technischer Bedeutung, weil die Strahlensterilisation für im medizinischen oder pharmazeutischen Bereich verwendete Formkörper weit verbreitet ist. Es ist bekannt, daß beispielsweise mikroporöse Membranen aus Polyamiden bei der Strahlensterilisation vollständig zerstört werden. Die Erhöhung der Beständigkeit wenig kompakter Formkörper mit hohem Oberflächen/Massenverhältnis gegen gamma-Strahlung wird erfindungsgemäß durch eine weitgehende Matrixpfropfung gelöst. Im Falle der Beständigkeit gegen gamma-Strahlung ist es also auf Grund der größeren Eindringtiefe dieser Strahlung erforderlich, einen größeren Anteil des Basispolymeren zu pfropfen, als dies für die Erhöhung der chemischen und der UV-Beständigkeit erforderlich ist.

Mechanische Eigenschaften.

Eine nennenswerte Änderung der mechanischen Eigenschaften von Formkörpern nach dem erfindungsgemäßen Verfahren ist naturgemäß auf jene Gruppe beschränkt, die ein hohes Oberflächen/Massenverhältnis aufweisen, weil sich anderenfalls eine Änderung der mechanischen Oberflächeneigenschaften gegenüber den Bulk-Eigenschaften nicht auswirkt.

Basispolymere wie Polyamide und Polyurethane werden technisch vorwiegend wegen ihrer besonderen mechanischen Eigenschaften eingesetzt, wobei im ersteren Fall die mechanische Festigkeit, im anderen Fall die Elastizität besonders herausragend sind. Eine grundsätzliche Änderung der chemischen Natur dieser Polymeren, wie sie die Substitution des Wasserstoffatoms am Stickstoff darstellt, hat eine grundsätzliche Änderung der zwischenmolekularen Kräfte zur Folge, indem die Ausbildung von Wasserstoffbrücken zwischen den Poylmerketten verhindert wird, wovon in der Regel keine Verbesserung der mechanischen Eigenschaften zu erwarten ist.

Erfindungsgemäß ist es überraschenderweise dennoch möglich, bei gezielter Auswahl der zur Pfropfung verwendeten Monomeren eine erhebliche Verbesserung von mechanischen Eigenschaften zu bewirken. So kann durch Pfropfung von Hydroxyethylacrylat auf mikroporösen Membranen aus Nylon 6,6 und Nylon 6 die Tendenz dieser Materialien zur Sprödigkeit im vollkommen trockenen Zustand, also beispielsweise nach Trocknung bei 105 °C im Trockenschrank, behoben werden und ein vollständig flexibles Material unbeeinträchtigter mechanischer Festigkeit erhalten werden. Wird hingegen anstelle von Hydroxyethylacrylat Hydroxyethylmethacrylat verwendet, ist bei gleichem Pfropfgrad im Gegenteil eher eine Versprödung zu beobachten.

Benetzbarkeit, Adsorptionseigenschaften und Zeta-Potential.

Die Art der erreichbaren Oberflächenmodifizierung wird naheliegenderweise in erster Linie durch die Art des eingesetzten Monomeren bestimmt, wobei gegebenenfalls auch Monomergemische eingesetzt werden können, wenn, wie bei der Beschreibung der technischen Ausführung des Verfahrens ausgeführt wird, spezielle Maßnahmen getroffen werden, die die Reproduzierbarkeit der Monomerzusammensetzung über den gesamten Produktionsprozeß gewährleisten.

Gemäß einer bevorzugten Ausführungsform der Erfindung werden die aufgepfropften Monomere vernetzt, vorzugsweise unter Einsatz bifunktioneller Monomerer, wobei in zweckmäßiger Weise die Vernetzung gleichzeitig mit der Aufpfropfung durchgeführt wird. Als derartige bifunktionelle Monomere seien ungesättigte Diester von Polyalkoholen erwähnt (siehe Monomere).

Es kann jedoch, je nach dem beabsichtigten Verwendungszweck auch zweckmäßig sein, das aufgepfropfte Polymer unvernetzt zu lassen, wobei in diesem Fall dafür Sorge zu tragen ist, daß in den aufzupfropfenden ethylenisch ungesättigten Monomeren keine bifunktionellen Monomere als Verunreinigungen enthalten sind.

Bezüglich der Monomerkonzentration, Pfropfdauer und Pfropftemperatur ist anzumerken, daß dann, wenn eine hohe Kettendichte bei geringer Kettenlänge erforderlich ist, beispielsweise im Hinblick auf die Beeinflussung von Benetzungseigenschaften, Adsorptionseigenschaften und Zeta-Potential, nur niedrige Monomerkonzentrationen und lange Pfropfzeiten anzuwenden sind, wobei möglichst niedrige Pfropfgrade und dementsprechend eine möglichst niedrige Durchflußminderung anzustreben sind. Geht es um die Pfropfung eines Ausgangspolymeren für die nachträgliche Fixierung von Liganden (beispielsweise natürliche und synthetische Liganden für die Affinitätschromatographie) sind größere Kettenlängen mit höheren Pfropfgraden anzustreben, aber nicht unbedingt eine hohe Kettendichte. In diesem Falle wird man eine höhere Monomerkonzentration wählen und mit kürzeren Pfropfzeiten auskommen.

Von den in der Auflistung angegebenen, für das erfindungsgemäße Pfropfverfahren geeigneten Monomeren, unter denen die Methacrylsäurederivate gegenüber sonst vergleichbaren Acrylsäurederivaten wegen ihrer wesentlich höheren Hydrolysestabilität generell bevorzugt werden, eignen sich die Acrylate und Methacrylate von Polyalkoholen, wie z.B. des Ethylenglycols, des Glycerins, des Diethylenglycols, des Octaethylenglycols und des Propylenglycols sowohl für die Hydrophilisierung, d.h. die Erhöhung der Benetzbarkeit durch Wasser, als auch die Verminderung der Proteinadsorption. Darüber hinaus sind die genannten Monomere geeignet zur Herstellung von Verbundmaterialien, die für die nachträgliche Fixierung von Affinitätsliganden durch Umsetzungen an den Hydroxylgruppen vorgesehen sind. Ein derartiges Produkt wird in einer Parallelanmeldung beschrieben (P 39 29 645.8-43). Besonders bevorzugt werden für diesen Anwendungsfall Hydroxyethylmethacrylat und Glycerinmethacrylat.

Die Pfropfung von Glycidylmethylacrylat wird bevorzugt zur Herstellung von Basismaterialien für vielfältige weitere Umsetzungen, die ebenfalls in einer Parallelanmeldung beschrieben sind (Ionenaustauscher, Chelataustauscher etc).

Für die Herstellung von Ionenaustauschern, vorzugsweise Membranionenaustauschern kommt neben der Pfropfung von Glycidylmethacrylat und der nachfolgenen Einführung der ionischen Gruppen auch die direkte Pfropfung der ionischen Monomeren in Frage, wobei allerdings der erstgenannte Weg mehr bevorzugt wird als der letztere. Die in der Liste der Monomeren genannten stark sauren, schwach sauren, stark basischen und schwach basischen Monomere sind für diese Ausführungsformen der Erfindung geeignet. Wenn anstelle eines für Ionenaustauscher erforderlichen hohen Pfropfgrades die bereits erwähnten Maßnahmen zur Erzielung eines niedrigen Pfropfgrades bei einer hohen Kettendichte angewandt werden, können die erwähnten Produkte mit modifiziertem Zeta-Potential erhalten werden, wobei die Forderung nach niedrigem Pfropfgrad in erster Linie im Falle von mikroporösen Membranen von Bedeutung ist, um eine unnötige Durchflußminderung zu vermeiden.

Pfropfgrad.

Unter Pfropfgrad wird die Massenzunahme des Formkörpers bei Anwendung des erfindungsgemäßen Pfropfverfahrens bezogen auf die Ausgangsmasse des Formkörpers, ausgedrückt in Gew.-%, verstanden. Es versteht sich von selbst, daß es sich dabei nur bei den nicht kompakten Formkörpern um eine relevante Größe handeln kann, weil andernfalls eine durch Oberflächenpfropfung im Dickenbereich bis 0.1 μm erreichbare Massenzunahme kein aussagekräftiges Kriterium darstellen kann.

Bei den nicht kompakten Formkörpern hingegen, unter denen die mikroporösen Membranen einen extremen Grenzfall darstellen, kann der Pfropfgrad nach dem erfindungsgemäßen Verfahren in sehr weiten Grenzen schwanken, je nachdem ob nur reine Oberflächeneigenschaften, die adsorptive Bindungskapazität oder die Bulk-Eigenschaften beeinflußt werden sollen. In der angegebenen Reihenfolge liegen die Bereiche der in Frage kommenden Pfropfgrade bei etwa 1-5 %, 5-45 % und 10-700 %, wobei diese Bereiche nur als ganz grobe Anhaltspunkte zu verstehen sind.

Tempern.

Aus physikalisch derzeit nicht vollständig geklärten Gründen ist das Pfropfverhalten der Basispolymeren nicht nur von deren chemischer Struktur, sondern auch von ihrer physikalischen Vorgeschichte abhängig. Dies sei am Beispiel der Polyamide wie folgt erläutert.

Polyamide beispielsweise scheinen in unterschiedlichen Modifikationen aufzutreten, die sich in auffälliger Weise durch ihre Oberflächeneigenschaften, insbesondere das Benetzungsverhalten, unterscheiden. Werden sie aus der Schmelze verarbeitet, wie dies überwiegend der Fall ist, weisen sie einen hohen, wenn auch im Vergleich zu den meisten übrigen Polymeren immer noch niedrigen Kontaktwinkel mit Wasser auf. Werden sie hingegen bei niedrigen Temperaturen aus Lösungen ausgefällt, wie dies beispielsweise bei der Membranherstellung nach dem als "Phaseninversionsprozeß" bekannten Verfahren der Fall ist, ist der Kontaktwinkel mit Wasser so niedrig, daß im Falle der Mikroporosität spontane Benetzung erfolgt. Derartige spontan benetzbare Produkte werden durch einen Tempervorgang nahe dem Kristallitschmelzpunkt in denselben Zustand überführt, der auch bei der direkten Verarbeitung aus der Schmelze vorliegt, d.h. sie sind dann ebensowenig benetzbar, wie aus der Schmelze hergestellte Produkte.

Im Zusammenhang mit dem erfindungsgemäßen Verfahren verdient dieses Phänomen insofern Erwähnung, als die durch Ausfällung aus Lösungen bei niedrigen Temperaturen hergestellten Formkörper aus Polyamid 6 und Polyamid 6,6, was beispielsweise für mikroporöse Membranen aus diesem Polymeren zurtifft, eine geringere und schlecht reproduzierbare Pfropftendenz aufweisen. Erst nach einem Temperschritt, der beispielsweise in überhitztem Wasserdampf bei Temperaturen zwischen 220 und 240 °C ausgeführt wird, kann ein ähnlich günstiges Pfropfverhalten, sowohl das Pfropfvermögen als auch die Reproduzierbarkeit betreffend, erhalten werden, wie bei direkt aus der Schmelze erhaltenen Produkten. Der genannte Temperschritt ist daher ein bevorzugter, wenn auch nicht obligater Teilschritt bei der Anwendung des erfindungsgemäßen Verfahrens auf nach dem Phaseninversionsverfahren bei niedrigen Temperaturen hergestellten mikroporösen Membranen aus Polyamiden.

Technische Durchführung des Verfahrens.

Die technische Durchführung des erfindungsgemäßen Verfahrens wird im folgenden für den Fall flächiger Bahnmaterialien, insbesondere mikroporöse Membranen, Vliese oder Gewebe, näher erläutert. Die sich daraus für die kompakteren Formkörper ergebenden Schlußfolgerungen sind für den Fachmann unschwer abzuleiten.

Die Pfropfung kann sowohl im Chargenbetrieb als auch kontinuierlich erfolgen. Zur Erzielung reproduzierbarer Ergebnisse über die gesammte Bahnlänge ist es dabei wesentlich, identische Bedingungen einzuhalten, wobei an die Konstanz dieser Bedingungen über die Zeit unterschiedliche Anforderungen beim Chargen- und beim kontinuierlichen Prozeß bestehen.

Für den Chargenbetrieb bietet es sich an, ein in der Textilindustrie unter der Bezeichnung "Jigger" bekanntes Gerät oder eine ähnliche Vorrichtung zu benutzen. Ein Jigger besteht aus zwei Aufwickelspulen und einem dazwischen liegenden Bad. Das Bahnmaterial wird wechselweise auf den beiden Spulen aufgewickelt und dabei durch das Bad gezogen. Die gesamte Vorrichtung kann durch eine Abdeckhaube hermetisch abgeschlossen werden.

Da die Wickelgeschwindigkeit sehr hoch gewählt werden kann, sind für den Anfang und das Ende der Bahn auch dann identische Bedingungen gegeben, wenn sich das Bad im Verlauf der Behandlung in seiner Zusammensetzung verändert. Obwohl eine derartige Veränderung nicht anzustreben ist, ist sie doch eher tolerierbar, als wenn ein kontinuierliches Verfahren angewandt wird.

Dies ist insbesondere dann von Bedeutung, wenn ein Gemisch von Monomeren gepfropft wird. Infolge der unterschiedlichen Copolymerisationsparameter der einzelnen Monomeren ändert sich die Pfropfflotte nicht nur in der Absolutkonzentration an Monomeren, sondern auch deren Verhältnis zueinander. Bei der diskontinuierlichen Pfropfung ändern sich daher zwar die Pfropfbedingungen mit der Zeit, doch in annähernd gleicher Weise über die gesamte Bahn, so daß die Reproduzierbarkeit gewährleistet ist.

Die Chlorierung kann entweder direkt im Jigger erfolgen, oder die Bahn wird bereits im chlorierten Zustand eingeführt. In jedem Fall muß die Einwirkungsdauer der Chlorierungslösung entsprechend den Erfordernissen eingehalten werden. Wenn also eine kurze Chlorierungsdauer zur Erzielung einer Tiefenwirkung der Pfropfung beabsichtigt ist, so ist die Einwirkungsdauer der Chlorierungsflotte vom Eintauchen der Bahn bis zum Auswaschen zu berücksichtigen, im Falle der Chlorierung im Jigger also auch die Verweilzeit im mit der Chlorierungsflotte imprägnierten Zustand auf den Aufwickelrollen.

Nach der Chlorierung ist eine gründliche Wässerung vorzunehmen, weil andernfalls bei der anschließenden Pfropfung nicht nur das Reduktionsmittel des Pfropfbades in unkontrollierbarer Weise verbraucht würde, sondern das anhaftende Chlorierungsmittel mit dem Reduktionsmittel auch ein die Homopolymerisation initiierendes Redoxsystem bilden würden.

Wurde die Chlorierung im Jigger durchgeführt, ist dieser nach der Wässerung für die Pfropfung bereit und der Gasraum wird mit Inertgas, naheliegenderweise Stickstoff, gespült, worauf unter Ausschluß von Luftsauerstoff die Pfropfflotte eingefüllt wird. Der Ausschluß von Luftsauerstoff hat denselben Grund wie die Spülung nach der Chlorierung, nämlich die Vermeidung des Reduktionsmittelverbrauchs und der Homopolymerisation.

Während der anschließenden Pfropfung, die unter Hin- und Herspulen der Bahn durch das Pfropfbad erfolgt, wird vorzugsweise das Redoxpotential nach den erfindungsgemäßen Gesichtspunkten durch Zudosieren des Reduktionsmittelkonzentrates, wobei es sich vorzugsweise um eine 2 %ige Lösung von Na-Dithionit handelt, konstant gehalten. Ebenso wird der pH-Wert durch Laugendosierung konstant gehalten, sofern nicht vorgezogen wird, eine entsprechend starke Pufferung der Flotte vorzunehmen, die dies erübrigen würde.

Nach der in Vorversuchen für die Erzielung des gewünschten Effektes ermittelten Pfropfdauer wird die verbleibende Pfropfflotte aus dem Jigger entfernt, eine Wässerung unter reichlicher Frischwasserzufuhr vorgenommen, und anschließend zur Entfernung des Restchlorgehaltes reduziert. Die für die Entchlorung erforderlichen Bedingungen richten sich zwar weitgehend nach dem angewandten Chlorierungsgrad und den Pfropfbedingungen und kann in Vorversuchen unter Zuhilfenahme iodometrischer Chlorbedingungen ermittelt werden. Im Normalfall ist für die Entchlorung die Einwirkung einer 1 %igen Na-Dithionitlösung bei pH 6 für 30 Minuten ausreichend.

Als kontinuierliches Verfahren kommt sowohl das Badverfahren als auch das Imprägnierverfahren in Frage. Beim Badverfahren wird die chlorierte Bahn für die erforderliche Pfropfdauer einmalig durch das Pfropfbad geführt, beim Imprägnierverfahren wird sie mit der Imprägnierlösung beaufschlagt und hinterher für die erforderliche Pfropfdauer durch eine Verweilstrecke geführt, die einen Inertgasraum darstellt. In beiden Fällen folgt ein Wässerungsbad und anschließend das Entchlorungsbad wie oben.

Die Gleichmäßigkeit über die Bahnlänge bereitet im ersteren Fall gewisse Schwierigkeiten, weil die Reproduzierbarkeit nur dann gegeben ist, wenn die Pfropfbedingungen und damit die Zusammensetzung des Pfropfbades über den gesamten Zeitraum der Pfropfung konstant gehalten werden. Schwierigkeiten bereitet dabei insbesondere die Konstanthaltung der Monomerkonzentration, während Redoxpotential und pH-Wert, wie bereits ausgeführt, wenig Probleme bereiten. Zwar läßt sich die Konzentration ethylenisch ungesättigter Monomerer über die UV-Absorption mit hinreichender Genauigkeit ermitteln, doch scheidet diese Methode in Gegenwart von Na-Dithionit aus, weil das Reduktionsmittel im gleichen Wellenlängenbereich stark absorbiert. Die Dichtemessung ist ebenfalls unzuverlässig, weil sich die Dichte des Pfropfbades schon durch die erforderliche Nachdosierung von Elektrolyten, wie Dithionit und Lauge, ändert.

Dennoch ist dieses Verfahren in bestimmten Fällen ohne weiteres anwendbar, nämlich dann, wenn das Monomer eine beschränkte Wasserlöslichkeit aufweist. In diesem Fall ist es zumindest im Bereich der Sättigungskonzentration möglich, eine konstante Monomerkonzentration auch über lange Pfropfzeiten aufrechtzuerhalten. Zwar ist dies nicht streng gültig, weil über die Pfropfdauer durch die Zudosierung von Lauge und Reduktionsmittel zwangsläufig ansteigende Salzkonzentration eine schleichende Änderung der Monomerlöslichkeit bewirkt wird, doch kann dieser Einfluß in erster Näherung vernachlässigt werden.

Demgegenüber kann der Einfluß der Elektrolytkonzentration auf die Monomerlöslichkeit auch gezielt ausgenutzt werden, indem durch einen hohen Salzzusatz die Löslichkeit von Monomeren, auch von wassermischbaren Monomeren wie z.B. Hydroxyethylmethacrylat, gezielt herabgesetzt wird, so daß im Sättigungsbereich mit konstanter Konzentration gepfropft werden kann. Dieser prinzipiell mögliche Weg wird jedoch im allgemeinen nicht bevorzugt.

Einige für das erfindungsgemäße Verfahren besonders bevorzugte Monomere, wie z.B. Glycidylmethacrylat, Vinylacetat und Methylmethacrylat, weisen eine Wasserlöslichkeit auf, die im für die Anwendung des Verfahrens geeigneten Bereich liegt. So beträgt die Wasserlöslichkeit des Vinylacetats etwa 1.5 %, die des Glycidylmethacrylats etwa 2.5 %. In diesen Fällen ist es auf relativ bequeme Weise möglich, das Pfropfbad laufend auf der der Sättigung entspechenden, konstanten Konzentration zu halten, beispielsweise dadurch, daß es in einem Umwälzkreislauf durch eine Absorptionskolonne mit dem Monomer gesättigt wird. Eine andere, noch einfachere Methode besteht darin, daß eine Emulsion des Monomeren unter Verwendung eines geeigneten Emulgators eingesetzt wird. Das Monomer stellt in einer derartigen Emulsion die disperse Phase dar, während die kontinuierliche, wäßrige Phase das Pfropfmedium bildet. Bei einem derartigen Verfahren ist aus einem Abnehmen des milchigen Aussehens schon visuell leicht erkennbar, ob das Pfropfmedium an Monomer verarmt ist, so daß eine Nachdosierung der Emulsion rechtzeitig erfolgen kann. In jedem Fall ist sichergestellt, daß die Monomerkonzentration im Pfropfmedium nicht unbemerkt unter die Sättigung absinkt.

Das vorgenannte Verfahren der Emulsionspfropfung weist zwar erhebliche Vorteile auf, ist jedoch im Sinne der Erfindung nicht universell einsetzbar, weil viele der bevorzugten Monomere mit Wasser mischbar sind. Außerdem kann es auch zweckmäßig sein, ein Gemisch von Monomeren anzuwenden. Wenn man in diesen Fällen nicht den bereits beschriebenen Chargenbetrieb vorzieht, beispielsweise deshalb, weil bei großen Produktionsmengen ein kontinuierlicher Betrieb aus wirtschatlichen Gründen in jedem Fall vorzuziehen ist, besteht die Alternative in der Imprägnierpfropfung unter Anwendung der Verweilstrecke im Inertgas.

Dabei ist zu berücksichtigen, daß weder Monomerkonzentration, Redoxpotential noch pH-Wert über die Zeit konstant gehalten werden können. Umgekehrt aber kann der zeitliche Verlauf dieser Größen über die gesamte Bahnlänge mit hoher Reproduzierbarkeit konstant gehalten und somit ein Höchstmaß an Konstanz der Produkteigenschaften gewährleistet werden, selbst dann, wenn mehr als ein Monomer zum Einsatz kommt.

Auf Grund ihrer universellen Anwendbarkeit wird diese Verfahrensvariante besonders bevorzugt, ohne daß dadurch die Zweckmäßigkeit der übrigen Varianten in speziellen Fällen relativiert werden soll.

Die folgenden Beispiele erläutern die Erfindung (Prozentangaben bedeuten gew.-%, wenn nichts anderes angegeben ist).

Beispiele 1 bis 7

Die Beispiele 1 bis 7 wurden mit unverstärkten mikroporösen Membranen der nominellen Porengröße 0.2 μm und einer hydraulischen Permeabilität von 20 ml/cm$^2$ min bar (Durchmesser der Membranproben 50 mm).

Beispiel 1

Chlorierung mit wäßriger Natriumhypochloritlösung bei verschiedenen pH-Werten.

Handelsübliche Chlorbleichlauge (enthaltend Natriumhypochlorit) wurde auf 1,2 % Aktivchlor verdünnt und auf pH-Werte von 5, 6, 7 und 8 eingestellt. Die Membranen wurden darin zwischen 5 und 400s (sec) bei Raumtemperatur behandelt, in Leitungswasser gespült, bis im Waschwasser kein Aktivchlor mehr nachweisbar war und der Chlorgehalt der Membranen jodometrisch bestimmt. Die Chlorgehalte in Abhängigkeit von der Behandlungsdauer wurden graphisch dargestellt (siehe Fig. 1).

Es ist festzustellen, daß die Chloraufnahme mit steigendem pH-Wert stark abfällt, mit steigender Behandlungszeit jedoch kontinuierlich zunimmt. Außerdem war festzustellen, daß bei pH=8 chlorierte Filter mechanisch deutlich geschädigt waren, während bei niedrigen pH-Werten keine Schädigung festzustellen war. Da die Stabilität von Hypochloritlösungen infolge Entwicklung von elementarem Chlor bei niedrigen pH-Werten abnimmt, wurde für weitere Chlorierungsversuche der pH=6 gewählt.

Die Wiederholung des Versuchs bei pH=6 mit vermindertem Aktivchlorgehalt (0,12 %) ist in Fig. 2 dargestellt. Für die Pfropfversuche nach Na-Hypochloritchlorierung wurden diese Bedingungen bei einer Chlorierungszeit von 5s (sec) als Standardbedingungen gewählt.

Beispiel 2

Chlorierung mit t-Butylhypochlorit.

Die Membranen wurden 0 - 800s (sec) in einer 0,1 %-igen Lösung von t-Butylhypochlorit in n-Hexyn, Methylenchlorid beziehungsweise Aceton behandelt, mit dem jeweiligen reinen Lösungsmittel gespült und der Chlorgehalt nach einer photometrischen Methode unter Verwendung von Aquaquant Cl (Merck) bestimmt. Der Chlorgehalt in Abhängigkeit von der Behandlungsdauer wurde graphisch dargestellt (siehe Fig. 3). Es ist festzustellen, daß der Chlorgehalt mit der Behandlungsdauer nach einer starken Zunahme in den ersten Sekunden stetig weiter zunimmt, wobei eine starke Abhängigkeit von dem verwendeten Lösungsmittel vorliegt. Obwohl der Aktivchlorgehalt der verwendeten Lösungen etwa 50 % des im zweiten Teil von Beispiel 1 angewandten beträgt, liegt die Chloraufnahme um mindestens den Faktor 10 unter der des Vergleichsbeispiels.

Es wird angenommen, daß die zunächst starke Chloraufnahme auf eine Chlorierung der Oberfläche zurückzuführen ist, die gefolgt ist von einer Chlorierung des Matrixinneren.

Beispiel 3

Chlorierung mit Chloramin T.

Die Membranen wurden unterschiedlich lange in einer 0,5 %-igen wäßrigen Lösung von Chloramin T (entsprechend einem Aktivchlorgehalt von 0,126 %) bei pH=6 chloriert, gespült und der Chlorgehalt mit Aquaquant Cl bestimmt. Graphische Darstellung siehe Fig. 4.

Der Chlorgehalt zeigt bei kurzen Chlorierungszeiten einen viel steileren Anstieg als bei t-Butylhypochlorit und bleibt nach etwa 120s (sec) weitgehend konstant. In weiteren, nicht dargestellten Versuchen wurde festgestellt, daß bei einer Chloramin T-Konzentration von 10 % praktisch der gleiche Endchlorgehalt erreicht wird.

Dieses Ergebnis wird in der Weise interpretiert, daß mit Chloramin T ausschließlich die Oberfläche chloriert wird. Ein geringfügiges weiteres Ansteigen des Chlorgehaltes wird auf geringe Mengen von anorganischem Hypochlorit zurückgeführt, die im Gleichgewicht mit Chloramin T stehen.

Beispiel 4

Pfropfung von HEMA nach Chlorierung mit Na-Hypochlorit.

Die Membranen wurden unter den in Beispiel 1 genannten Standardbedingungen chloriert (entsprechend einem Chlorgehalt von 0,5 %) und verschieden lange in einer 10 %-igen Lösung von Hydroxyethylmethacrylat in 0,1 M Phosphatpuffer pH=8 unter Zudosierung von Na-Dithionitlösung zur Konstanthaltung des Redoxpotentials gepfropft. Das Redoxpotential betrug -340 beziehungsweise -410 mV. Der Pfropfverlauf ist in Fig. 5 graphisch dargestellt, wobei der Pfropfgrad die Gewichtszunahme in % des Ausgangsgewichtes darstellt.

Bei höherem Redoxpotential erfolgt eine raschere Pfropfung in der Anfangsphase, gefolgt von einer Abflachung. Der Endpfropfgrad nach 20 h ist dagegen bei dem niedrigeren Redoxpotential höher.

In Fig. 6 ist die Durchflußleistung der gepfropften Membranen gegen den Pfropfgrad aufgetragen. Es zeigt sich, daß bei gleichem Pfropfgrad die Durchflußabnahme bei niedrigerem Potential größer ist. In beiden Fällen ist bei Pfropfgraden über 100 - 150 % wieder eine Zunahme der Durchflußleistung zu beobachten.

Beispiel 5

Pfropfung von HEMA nach Chlorierung mit Chloramin T.

Die Membranen wurden 5 beziehungsweise 600s (sec) in einer 0,5 %-igen wäßrigen Lösung von Chloramin T bei pH=6 chloriert, entsprechend einem Chlorgehalt von 0,025 beziehungsweise 0,05 %. Die Pfropfung erfolgte wie in Beispiel 4 beschrieben. Der Pfropfgrad in Abhängigkeit von der Pfropfdauer ist in Fig. 7 dargestellt. In der Anfangsphase erfolgt die Pfropfung bei dem niedrigen Chlorgehalt schneller, wobei nach etwa 90 min bei beiden Versuchen der gleiche Pfropfgrad erreicht wird. Während bei niedrigem Chlorgehalt die Pfropfung nun jedoch praktisch beendet ist, vermutlich weil der Chlorgehalt verbraucht wird, steigt bei hohem Chlorgehalt der Pfropfgrad weiterhin an.

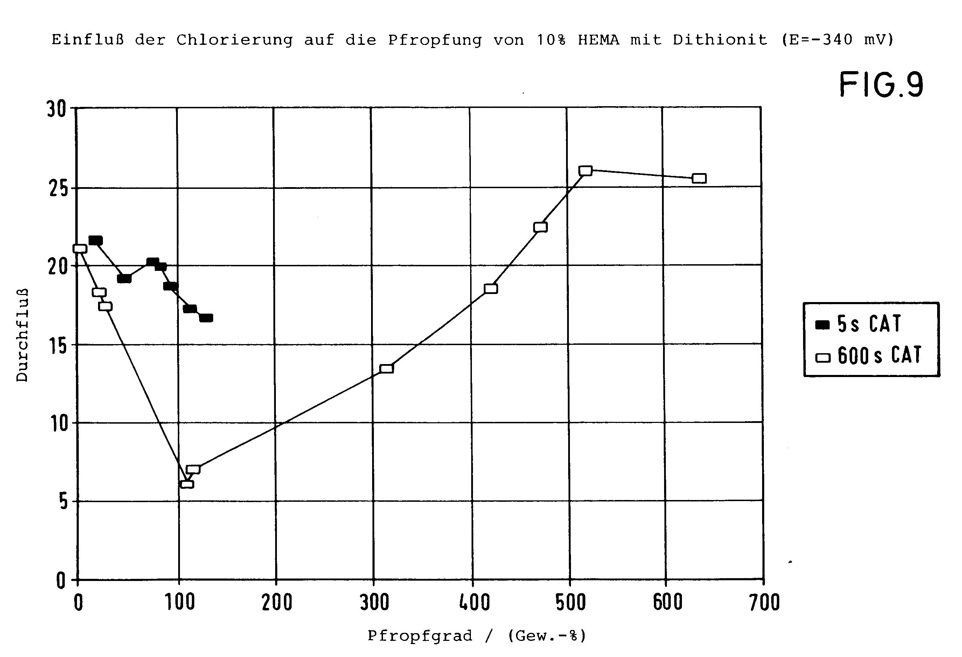

In Fig. 8 und 9 ist die Abhängigkeit des Flächenwachstums beziehungsweise der Durchflußrate vom Pfropfgrad dargestellt. Sowohl Durchflußrate als auch Flächenwachstum liegen bei gleichem Pfropfgrad für die niedriger chlorierten Proben über denen der hochchlorierten. Die letzteren weisen also bevorzugt Oberflächenpfropfung auf.

Beispiel 6

Pfropfung verschiedener Monomere auf mit Monomere auf mit Na-Hypochlorit-chlorierten Membranen nach der Fe-Rongalit-Methode.

Chlorierungslösung: Handelsübliche Chlorbleichlauge wurde mit RO-Wasser auf 0,12 % Aktivchlor verdünnt und mit verdünnter Schwefelsäure auf pH=6 gestellt.

Chlorierung: Die trockenen Membranen wurden auf die Chlorierungslösung gelegt und für 2s (sec) untergetaucht, wieder entnommen, mit RO-Wasser gespült, 15 min in 1 %-iger Harnstofflösung pH=10 gespült und anschließend 30 min in RO-Wasser gespült.

Pfropfbad: Wäßrige Lösung von 0,1 % FeNaEDTA ($Fe^{3+}$-EDTA-Komplex), 0,1 % EDTA, 1 % Rongalit, 2 % Na-Carbonat, 10 % Monomer, mit 2 N Schwefelsäure auf pH=10 gebracht.

Pfropfung: Das vorchlorierte Filter wurde 10 min bei Raumtemperatur unter schwachem Rühren gepfropft, 10 min mit RO-Wasser gespült, 2 mal je 5 min mit Aceton gespült und 15 min bei 60 °C im Luftstrom getrocknet.

| Monomer | Pfropfgrad (%) nach 10 min | Pfropfgrad (%) nach 30 min |
|---|---|---|
| Hydroxyethalmethacrylat | 7,6 | 17,7 |
| Methacrylamidoglycolat-methylether | 2,3 | 3,8 |
| Glycerinmethacrylat | 4,8 | 11,6 |
| Sulfopropylmethacrylat | 2,2 | 7,2 |
| N-Morpholinopropyl-methacrylamid | 0,9 | 4,9 |
| Acrylsäure | 0,1 | 1,7 |
| Vinylpyrrolidon | 2,6 | 7,1 |
| N-Acryamidoglycolsäure | 0,6 | 2,7 |
| Methacrylamid | 1,2 | 4,1 |

| Monomer | Pfropfgrad (%) nach 10 min | Pfropfgrad (%) nach 30 min |
|---|---|---|
| 2-Acrylamido-2-methyl-Propansulfonsäure | 1,1 | 3,2 |
| Methacrylamidopropyl-trimethylammoniumchlorid | 0,7 | 1,6 |

Beispiel 7

Pfropfung verschiedener Monomere auf mit Na-Hypochloritchlorierten Membranen nach der Na-Dithionit-Methode ohne Potentialeinstellung.

Chlorierung: Wie Beispiel 6

Pfropfbad: 0,1 % Na-Dithionit in 0,15 M Phosphatpuffer pH=8, 10 % Monomer, pH auf 8 nach Bedarf nachgestellt.

Pfropfung: Wie Beispiel 6

| Monomer | Pfropfgrad (%) nach 10 min | Pfropfgrad (%) nach 30 min |
|---|---|---|
| Diethylenglycolmethacrylat | 30,1 | 70,3 |
| Hydroxypropylmethacrylat | 30,2 | 108,0 |
| Hydroxyethalmethacrylat | 54,3 | 155,0 |
| Methacrylamidoglycolat-methylether | 34,6 | 88,1 |
| Hydroxyethylacrylat | 36,5 | 63,3 |
| Hydroxypropylacrylat | 19,4 | 54,5 |
| Glycerinmethacrylat | 28,1 | 57,5 |
| Acrylamid | 37,2 | 37,9 |
| Vinylacetat (ges. Lösung) | 12,9 | 29,2 |

| Monomer | Pfropfgrad (%) nach 10 min | Pfropfgrad (%) nach 30 min |
|---|---|---|
| Octaethylenglycol methacrylat | 8,0 | 20,6 |
| Sulfopropylmethacrylat | 8,1 | 10,2 |
| N-Morpholinopropyl-methacrylamid | 8,1 | 10,2 |
| Acrylsäure | 1,8 | 2,9 |
| Vinylpyrrolidon | 15,7 | 15,2 |
| Methacryamid | 2,8 | 3,2 |
| 2-Acrylamido-2-methyl-propansulfonsäure | 3,0 | 4,0 |
| Vinylimidazol | 3,2 | 3,1 |
| Methylvinylacetamid | 6,4 | 6,5 |

Beispiel 8

Kontinuierliche Pfropfung von Glycidylmethacrylat nach der Emulsionsmethode auf einer Nylon 6 Membranbahn der Breite 40 cm, Länge 30 m (nominelle Porengröße 0,45 µm) für weitere Umsetzungen zu Membranionenaustauschern u. dgl..

CAT-Lösung: 2 %-ige Lösung von Chloramin T, mit Schwefelsäure auf pH=6,3 gestellt.

Monomeremulsion: 6 kg Glycidylmethacrylat werden mit 120 g Emulgator (Arlatone G, ICI) vermischt und mit 113,8 kg 0,1 M Na-Phosphatpuffer pH=8 5 min lang mit einem Flügelrührer emulgiert.

CAT-Lösung und Monomeremulsion wurden in Behandlungswannen mit Umlenkrollen für die Membranbahn gefüllt, wobei die Monomerwanne zur Atmosphäre abgedichtet und mit Stickstoff beaufschlagt wird. Zwischen CAT-Wanne und Monomerwanne befinden sich zwei weitere Wannen, wobei die erste mit RO-Wasser gefüllt ist, das während der Behandlung mit 100 l/h ausgetauscht wird, die zweite mit Phosphatpuffer pH=8. Nach der Monomerwanne folgt eine weitere Spülwanne mit RO-Wasser, anschließend die Aufwicklung. Die Trocknung erfolgte in einem getrennten Schritt auf einer Trockentrommel von 70 °C.

Die Monomeremulsion wird durch Zudosieren einer Lösung von 3 % Na-Dithionit und 3 % Natriumhydroxid (pH 11-12) auf ein Redoxpotential von-310 mV gebracht, welches während der Pfropfung potentionmetrisch gemessen und durch Nachdosieren der 3 %-igen Dithionitlösung konstant gehalten wird. Die Verweilzeit im CAT-Bad beträgt 2 min, die Verweilzeit im Monomerbad (Pfropfdauer) wird über die Bahngeschwindigkeit eingestellt.

| Pfropfdauer (min) | Pfropfgrad (%) |
|---|---|
| 5,7 | 15 |
| 13 | 28,5 |

Beispiel 9

Wie Beispiel 8, jedoch wird anstelle der Nylon 6-Membrane ein Nylon 6,6-Vlies mit einem Flächengewicht von 30 g/$m^2$ eingesetzt. Der Pfropfgrad beträgt bei einer Pfropfdauer von 15 min 7 %.

Beispiel 10

Untersuchung der Oxidationsbeständigkeit.

Verschiedene Membranproben der nominellen Porengröße 0,2 µm wurden im Gasraum eines Autoklaven der Bauform, wie er üblicherweise für die Sterilisation eingesetzt wird, deponiert. Der Autoklave wurde auf 102 °C erhitzt, wobei jedoch nicht, wie sonst üblich, die Luft durch Abblasen von Dampf entfernt wurde. Dadurch wurde die gleichzeitige Einwirkung von Wasserdampf und Luftsauerstoff bei 142 °C sichergestellt. Nach 1 h wurden die Membranen entnommen und der Berstdruck geprüft. Die Berstdruckmessung erfolgte in der Weise, daß die benetzten Filter ohne Unterstützung auf einen Durchmesser von 25 mm mit einem steigenden Gasdruck beaufschlagt wurden und der Druck bei dem man das Bersten der Membranen eintrat, bestimmt wurde. Sämtliche Membranproben waren unverstärkt. Wenn ein Berstdruck meßbar war, wurde die Behandlung mehrfach wiederholt. Das Ergebnis läßt erkennen, daß die Nylonmembrane des Marktes ein extrahierbares Antioxidans enthält und die gepfropfte Membrane dieselbe Oxidationsbeständigkeit aufweist, wie die mit Antioxidans stabilisierte.

| Probe | Anzahl der Autoklavierungen | Berstdruck (bar) |
| --- | --- | --- |
| Nylon 6,6 ungepfropft | 0 | 0,30 |
| | 1 | 0,0 |
| Ultipor (Pall) | 0 | 0,24 |
| | 2 | 0,25 |
| | 4 | 0,26 |
| Ultipor (Pall), über Nacht mit Ethanol extrahiert | 0 | 0,24 |
| | 1 | 0,0 |
| Nylon 6,6, mit Hydroxyethylmethacrylat gepfropft (Pfropfgrad 14 %) | 0 | 0,58 |
| | 2 | 0,48 |
| | 4 | 0,48 |
| | 5 | 0,43 |

Beispiel 11.

Untersuchung der γ-Strahlenbeständigkeit.

Verschiedene Membranproben der nominellen Porengröße 0.2 µm wurden einer γ-Strahlendosis von 2.5kGy (MRad) ausgesetzt und anschließend der Berstdruck wie in Beispiel 10 beschrieben bestimmt.

| Probe | Berstdruck (bar) vor Bestrahlung | nach Bestrahlung |
|---|---|---|
| Nylon 6-Membrane | 0.28 | 0.01 |
| Ultipor (Pall) ohne Antioxidans | 0.22 | 0.015 |
| Ultipor (Pall) mit Antioxidans | 0.23 | 0.02 |
| Nylon 6-Membrane nach Beispiel 5 mit Hydroxyethylmethacrylat gepfropft (Pfropfgrad 10 %) | 0.29 | 0.06 |
| Nylon 6-Membrane nach Beispiel 8 mit Glycidylmethacrylat gepfropft (Pfropfgrad 28 %) | 0.33 | 0.23 |

Dieses Beispiel zeigt, daß durch Anwendung des erfindungsgemäßen Pfropfverfahrens Polyamidmembranen erhalten werden können, die nach Einwirkung der bei der Strahlensterilisierung üblichen Strahlendosis 70 % der ursprünglichen mechanischen Festigkeit aufweisen.

Beispiel 12.

Benetzbarkeit von Hydroxyethylmethacrylat-gepfropften Membranen durch Flüssigkeiten hoher Oberflächenspannung.

An nach Beispiel 5 nach 600 sec mit Chloramin T chlorierten und mit Hydroxyethylmethacrylat gepfropften Nylon 6-Membranen der nominellen Porengröße 0.2 μ wurde diejenige Zeit bestimmt, die zwischen dem Aufbringen von 10 μl Wasser ($\gamma$ = 72 dyn/cm) bzw. Kochsalzlösung auf der Membranoberfläche und dem vollständigen Aufsaugen der Flüssigkeit durch die Membrane verstreicht (Saugzeit). Es wurde eine 17 %ige ($\gamma$ = 79 dyn/cm) und eine gesättigte Kochsalzlösung (26 %, $\gamma$ = 82.6 dyn/cm) verwendet. Zum Vergleich wurden die ungepfropften Membranen sowie handelsübliche Nylon 6,6 - Membranen herangezogen. Bei dem Handelsprodukt "Loprodyne" handelt es sich um ein zur Erhöhung der Hydrophilie oberflächenmodifiziertes Produkt. In der Tabelle sind die Saugzeiten in Sekunden angegeben.

| Probe | Wasser | 17 % NaCl | 26 % NaCl |
|---|---|---|---|
| ungepfropft | 33 | >3600 | keine Benetzung |
| Pfropfgrad 10 % | 15 | 200 | keine Benetzung |
| Pfropfgrad 20 % | 17 | 85 | 300 |
| Ultipor 0.2 µ (Pall) | 21 | >3600 | keine Benetzung |
| Loprodyne 0.2 µ(Pall) | 20 | 210 | keine Benetzung |

Die für einen speziellen Anwendungsfall erforderliche Benetzbarkeit läßt sich bei dem erfindungsgemäßen Pfropfverfahren in weiten Grenzen einstellen, wobei sämtliche hydrophilen Monomere anwendbar sind. Dabei ist es nicht erforderlich, daß das Monomer Hydroxylgruppen aufweist. Ebenso kommen die ionisohen Monomere in Frage, aber auch neutrale, wie z.B. Vinylpyrrolidon. Für die hydrophile Modifizierung kann auch Glycidylmethacrylat, das selbst keine Hydrophilierung bewirkt, gepfropft werden und anschließend zu Glycerinmethacrylat hydrolysiert werden. Das Gleiche gilt für die Pfropfung von vinylacetat und die anschließende Verseifung zu Vinylalkohol.

**Patentansprüche**

1. Verfahren zur Oberflächenpfropfung von Formkörpern, insbesondere auch mikroporösen Membranen aus stickstoffhaltigen Polymeren mit ethylenisch ungesättigten Monomeren
   **dadurch gekennzeichnet,**
   daß man
   a) unter Verwendung von anorganischen oder organischen Hypohalogeniten und/oder organischen N-Halogenderivaten als Halogenierungsmittel Wasserstoffatome an den Stickstoffatomen der Polymermembranen oder Polymerformkörpern durch Halogenatome ersetzt,
   b) einen Teil derselben durch Reduktionsmittel in Gegenwart von ethylenisch ungesättigten Monomeren unter radikalischer Aufpfropfung derselben an den Stickstoffatomen entfernt, und
   c) anschließend die verbleibenden Halogenatome durch Reduktionsmittel in Abwesenheit von Monomeren entfernt.

2. Verfahren nach Anspruch 1, dadurch gekennzeichnet, daß man als Halogenierungsmittel ein Chlorierungsmittel verwendet.

3. Verfahren nach Anspruch 2, dadurch gekennzeichnet, daß man als Chlorierungsmittel ein anorganisches Hypochlorit, vorzugsweise Na-Hypochlorit in wäßriger Lösung, ein organisches Hypochlorit, vorzugsweise t-Butylhypochlorit, gelöst in einem inerten organischen Lösungsmittel, das Natriumsalz des N-Chlor-p-Toluolsulfonamids mit einem Formelgewicht von 230 und einer Hydrolysekonstante von etwa $10^{-8}$ oder Dichlorisocyanursäure verwendet.

4. Verfahren nach Anspruch 3 unter Verwendung eines anorganischen Hypochlorits, dadurch gekennzeichnet, daß der pH-Wert des Chlorierungsmittels 5 bis 7, vorzugsweise etwa 6 beträgt.

5. Verfahren nach Anspruch 3 unter Verwendung eines anorganischen Hypochlorits, dadurch gekennzeichnet, daß der Aktivchlorgehalt des Chlorierungsmittels 0,05 bis 3 %, vorzugsweise 0,1 bis 0,5 % beträgt.

6. Verfahren nach den Ansprüchen 3 bis 5, dadurch gekennzeichnet, daß man die Chlorierung bei Raumtemperatur durchführt und die Chlorierungsdauer zur Bewirkung einer Matrixpfropfung 30 s bis 5 min, vorzugsweise 1 bis 2 min, beträgt oder zur Bewirkung einer reinen Oberflächenpfropfung 5 bis 15 min, vorzugsweise etwa 10 min, beträgt.

7. Verfahren nach Anspruch 3 unter Verwendung eines organischen Hypochlorits, dadurch gekennzeichnet, daß man als organisches Lösungsmittel n-Hexan, Methylenchlorid oder Aceton verwendet.

8. Verfahren nach Anspruch 3 unter Verwendung des Natriumsalzes des N-Chlor-p-Toluolsuolfonamids, dadurch gekennzeichnet, daß der pH-Wert des Chlorierungsmittels zwischen 5 bis 7, vorzugsweise etwa 6,3 beträgt.

9. Verfahren nach Anspruch 3 unter Verwendung des Natriumsalzes des n-Chlor-p-Toluolsulfonamids, dadurch gekennzeichnet, daß die Konzentration des Chlorierungsmittels 0,1 bis 3 %, vorzugsweise 1 bis 2 % beträgt.

10. Verfahren nach den Ansprüchen 8 oder 9, dadurch gekennzeichnet, daß man zur Erzielung einer Matrixpfropfung Chlorierungszeiten von 2 bis 10 s oder zur Erzielung einer reinen Oberflächenpfropfung Chlorierungszeiten von 0,5 bis 10 min, vorzugsweise von 1 bis 5 min, anwendet.

11. Verfahren nach Anspruch 1, dadurch gekennzeichnet, daß man als Halogenierungsmittel ein anorganisches Hypobromit verwendet.

12. Verfahren nach Anspruch 11, dadurch gekennzeichnet, daß man das anorganische Hypobromit in situ erzeugt, indem man den zu bromierenden Formkörper nacheinander einer Brom- und Ammoniakatmosphäre aussetzt.

13. Verfahren nach den Ansprüchen 1 bis 12, dadurch gekennzeichnet, daß man als ethylenisch ungesättigte Monomere einfach ungesättigte Monomere verwendet.

14. Verfahren nach Anspruch 13, dadurch gekennzeichnet, daß man als einfach ethylenisch ungesättigte Monomere Acrylsäure, Methacrylsäure sowie deren Ester oder Amide oder hydroxylgruppenhaltige einfach ethylenisch ungesättigte Monomere verwendet.

15. Verfahren nach Anspruch 14, dadurch gekennzeichnet, daß man als einfach ethylenisch ungesättigte Monomere verwendet:
Hydroxyethylmethacrylat
Methacrylamidoglycolatmethylether
Glycerinmethacrylat
Sulfopropylmethacrylat
N-Morpholinopropylmethacrylamid
Acrylsäure
Vinylpyrrolidon
N-Acryamidoglycolsäure
Methacrylamid
2-Acrylamido-2-methyl-propansulfonsäure
Methacrylamidopropyltrimethylammoniumchlorid
Diethylenglycolmethacrylat
Hydroxypropylmethacrylat
Methaacrylamidoglycolatmethylether
Hydroxyethylacrylat
Hydroxypropylacrylat
Acrylamid
Vinylacetat
Octaethylenglycolmethacrylat
Vinylimidazol
Methylvinylacetamid oder
Glycidylmethacrylat.

16. Verfahren nach den Ansprüchen 1 bis 12, dadurch gekennzeichnet, daß man als ethylenisch ungesättigte Monomere mehrfach ungesättigte Monomere verwendet.

17. Verfahren nach Anspruch 16, dadurch gekennzeichnet, daß man als mehrfach ungesättigte Monomere Pentaerythritdimethacrylat, Glycerindimethacrylat, Tetraethylenglycoldimethacrylat oder Tetraethylenglycoldiacrylat verwendet.

18. Verfahren nach den Ansprüchen 1 bis 17, dadurch gekennzeichnet, daß man Gemische von Monomeren verwendet.

19. Verfahren nach den Ansprüchen 1 bis 18, dadurch gekennzeichnet, daß man die aufgepfropften ethylenisch ungesättigten Monomeren gezielt vernetzt.

20. Verfahren nach Anspruch 19, dadurch gekennzeichnet, daß man die Vernetzung unter Einsatz von bifunktionellen Monomeren gleichzeitig mit der Aufpfropfung durchführt.

21. Verfahren nach den Ansprüchen 1 bis 26, dadurch gekennzeichnet, daß man die Monomeren der Pfropflösung in Form einer Emulsion zusetzt.

22. Verfahren nach den Ansprüchen 1 bis 21, dadurch gekennzeichnet, daß man als Reduktionsmittel zur Entfernung der Halogenatome bei der Pfropfung Natriumdithionit, Natriumdithionit bei einem pH-Wert von 6 bis 10, vorzugsweise von 7,5 bis 8, und in einer Konzentration von 0,02 bis 1 %, Rongalit, Rongalit bei Temperaturen von über 40 °C, Rongalit in Kombination mit EDTA-komplexiertem $Fe^{2+}$ bei einem pH-Wert von etwa 10, Hydrazin, Ascorbinsäure oder Ascorbinsäure im alkalischen Bereich einsetzt.

23. Verfahren nach Anspruch 22, dadurch gekennzeichnet, daß man Natriumdithionit bei einem Redoxpotential von -100 bis -700 mV, vorzugsweise zwischen -100 und -500 mV einsetzt und wahlweise das Redoxpotential während der Pfropfung potentiometrisch bestimmt und durch Zudosierung eines Natriumdithionitkonzentrats konstant hält.

24. Verfahren nach den Ansprüchen 1 bis 23, dadurch gekennzeichnet, daß man als stickstoffhaltige Formkörper solche aus aliphatischen Polyamiden, Polyurethanen, Polysulfonamiden sowie aus Polymeren verwendet, die den Stickstoff nicht in der Hauptkette, sondern in der Seitenkette aufweisen.

25. Verfahren nach Anspruch 24, dadurch gekennzeichnet, daß man Formkörper in Form von Folien, Kapillaren, Fasern oder daraus hergestellten Geweben, Vliesen oder Membranen einsetzt.

26. Verfahren nach Anspruch 25, dadurch gekennzeichnet, daß man Formkörper in Gestalt von Fasern in einem Dickenbereich von 1 bis 100 µm und einem Oberflächen/Massenverhältnis von 0,4 bis 4 $m^2$/g einsetzt.

27. Verfahren nach den Ansprüchen 1 bis 26, dadurch gekennzeichnet, daß man zur Pfropfung flächige Bahnmaterialien einsetzt.

28. Verfahren nach Anspruch 27, dadurch gekennzeichnet, daß man die Bahn mit der Pfropflösung imprägniert und die Pfropfung kontinuierlich in einer Verweilstrecke unter Inertgas durchführt.

29. Verfahren nach Anspruch 27, dadurch gekennzeichnet, daß man es diskontinuierlich an einem Jigger durchführt.

30. Verfahren nach Anspruch 27, dadurch gekennzeichnet, daß man es kontinuierlich in einem Pfropfbad durchführt.

31. Verfahren nach Anspruch 30, dadurch gekennzeichnet, daß man die Monomerkonzentration durch Verwendung eines Monomeren beschränkter Wasserlöslichkeit und Aufrechterhaltung der Sättigungskonzentration konstant hält.

32. Verfahren nach Anspruch 31, dadurch gekennzeichnet, daß man die Sättigungskonzentration des Monomeren durch Zugabe von Elektrolyten herabsetzt.

33. Mit ethylenisch ungesättigten Monomeren gepfropfte Formkörper, hergestellt durch Pfropfen von Formkörpern aus stickstoffhaltigen Polymeren, an deren Stickstoffatomen durch Halogene substituierbare Wasserstoffatome sitzen, mit einem Oberflächen/Massen-Verhältnis von 0,4 bis 50 $m^2$/g,

**dadurch gekennzeichnet**,
daß der Pfropfgrad 1 bis 700 % beträgt.

**34.** Gepfropfte Formkörper nach Anspruch 33, dadurch gekennzeichnet, daß der Pfropfgrad 1 bis 5 % beträgt.

**35.** Gepfropfte Formkörper nach Anspruch 33, dadurch gekennzeichnet, daß der Pfropfgrad 5 bis 45 % beträgt.

**36.** Gepfropfte Formkörper nach Anspruch 33, dadurch gekennzeichnet, daß die aufgepfropften Monomere Acrylate oder Methacrylate von Polyolen sind, vorzugsweise solche des Ethylenglycols, des Glycerins, des Diethylenglycols, des Octaethylenglycols oder des Propylenglycols, wobei die gepfropften Formkörper gegenüber den ungepfropften Formkörpern eine erhöhte Benetzbarkeit durch Wasser aufweisen.

**37.** Gepfropfte Formkörper nach Anspruch 33, dadurch gekennzeichnet, daß sie gegenüber den ungepfropften Formkörpern eine erhöhte Beständigkeit gegen Kettenabbau und/oder eine herabgesetzte Hydrolyse-, Oxidations- und Strahlenempfindlichkeit aufweisen.

**38.** Gepfropfte Formkörper nach den Ansprüchen 34 und 35, hergestellt durch Pfropfen von keinen Zusatz an extrahierbaren Antioxidantien enthaltenden mikroporösen Nylonmembranen, dadurch gekennzeichnet, daß die gepfropften Nylonmembranen nach mehr als einstündigem Autoklavieren bei mindestens 140°C in Gegenwart von Luftsauerstoff keine meßbare Verminderung der mechanischen Festigkeit zeigen.

**39.** Gepfropfte Formkörper nach Anspruch 35, hergestellt durch Pfropfen einer mikroporösen Nylon 6 -Membran mit Hydroxyethylmethacrylat, dadurch gekennzeichnet, daß die gepfropfte Membrane in der Lage ist, bei einem Pfropfgrad von mindestens 10 % 10 µl einer 17-prozentigen Kochlösung innerhalb von 200 s und bei einem Pfropfgrad von mindestens 20 % 10 µl einer 17-prozentigen Kochsalzlösung innerhalb von 85 s bzw. 10 µl einer 26-prozentigen Kochsalzlösung innerhalb von 300 s aufzusaugen.

**40.** Verwendung gepfropfter Formkörper gemäß den vorhergehenden Ansprüchen für die adsorptive Bindung.

**41.** Verwendung nach Anspruch 40, dadurch gekennzeichnet, daß man nach Pfropfung hydroxylgruppenhaltiger Monomerer synthetische oder natürliche Liganden für die Affinitätschromatographie fixiert.

## Claims

**1.** Process for the surface grafting of formed bodies, in particular also microporous membranes of nitrogen-containing polymers with ethylenically unsaturated monomers, characterised in that
a) hydrogen atoms on the nitrogen atoms of the polymer membranes or polymer formed bodies are replaced by halogen atoms with use of inorganic or organic hypohalogenites and/or organic N-halogen derivatives as halogenating agent,
b) a part of the same is removed by reducing agents in the presence of ethylenically unsaturated monomers during radical grafting on of the same onto the nitrogen atoms, and
c) then the remaining halogen atoms are removed by reducing agents in the absence of monomers.

**2.** Process according to claim 1, characterised in that a chlorinating agent is used as halogenating agent.

**3.** Process according to claim 2, characterised in that an inorganic hypochlorite, preferably Na hypochlorite in aqueous solution, an organic hypochlorite, preferably t-butylhypochlorite, dissolved in an inert organic solvent, the sodium salt of N-chloro-p-toluene sulfonamide with a formula weight of 230 and a hydrolysis constant of approximately $10^{-8}$, or dichloroisocyanuric acid, is used as chlorinating agent.

**4.** Process according to claim 3 with use of an inorganic hypochlorite, characterised in that the pH value of the chlorinating agent amounts to 5 to 7, preferably approximately 6.

**5.** Process according to claim 3 with use of an inorganic hypochlorite, characterised in that the active chlorine content of the chlorinating agent amounts to 0.05 to 3%, preferably 0.1 to 0.5%.

6. Process according to claims 3 to 5, characterised in that the chlorination is carried out at room temperature and the chlorination time for effecting a matrix grafting amounts to 30.s to 5 min., preferably 1 to 2 min., or for effecting a pure surface grafting amounts to 5 to 15 min., preferably approximately 10 min.

7. The process according to claim 3 with use of an organic hypochlorite, characterised in that n-hexane, methylene chloride or acetone is used as organic solvent.

8. Process according to claim 3 with use of the sodium salt of N-chloro-p-toluene sulfonamide, characterised in that the pH value of the chlorinating agent amounts to between 5 and 7, preferably approximately 6.3.

9. Process according to claim 3 with use of the sodim salt of N-chloro-p-toluene sulfonamide, characterised in that the concentration of the chlorinating agent amounts to 0.1 to 3%, preferably 1 to 2%.

10. Process according to claim 8 or 9, characterised in that chlorination times of 2 to 10 s. are used for achieving a matrix grafting or chlorination times of 0.5 to 10 min., preferably of 1 to 5 min., are used for achieving a pure surface grafting.

11. Process according to claim 1, characterised in that an inorganic hypobromite is used as halogenating agent.

12. Process according to claim 11, characterised in that the inorganic hypobromite is produced in situ by exposing the formed body to be brominated successively to an atmosphere or bromine and one of ammonia.

13. Process according to claims 1 to 12, characterised in that mono unsaturated monomers are used as ethylenically unsaturated monomers.

14. The process according to claim 13, characterised in that acrylic acid, methacrylic acid and its esters or amides or mono ethylenically unsaturated monomers containing hydroxy groups are used as ethylenically unsaturated monomers.

15. Process according to claim 14, characterised in that as mono ethylenically unsaturated monomer there is used:
hydroxyethylmethacrylate
methacrylamidoglycolate methylether
glycerol methacrylate
sulfopropylmethacrylate
N-morpholinopropylmethacrylamide
acrylic acid
vinyl pyrrolidone
N-acrylamidoglycolic acid
methacrylamide
2-acrylamide-2-methyl-propanesulfonic acid
methacrylamidopropyltrimethylammonium chloride
diethyleneglycolmethacrylate
hydroxypropylmethacrylate
methacrylamidoglycolate methylether
hydroxyethylacrylate
hydroxypropylacrylate
acrylamide
vinylacetate
octaethylene glycol methacrylate
vinylimidazole
methylvinylacetamide or
glycidylmethacrylate.

16. Process according to claims 1 to 12, characterised in that polyunsaturated monomers are used as ethylenically unsaturated monomers.

17. Process according to claim 16, characterised in that as polyunsaturated mononer there is used pentaerythrite dimethacrylate, glycerol dimethacrylate, tetraethylene glycol dimethacrylate or tetraethylene glycol diacrylate.

**18.** Process according to claims 1 to 17, characterised in that mixtures of momomers are used.

**19.** Process according to claims 1 to 18, characterised in that the grafted on, ethylenically unsaturated monomers are cross-linked.

**20.** Process according to claim 19, characterised in that the cross-linking is carried out with use of bifunctional monomers simultaneously with the grafting on.

**21.** Process according to claims 1 to 26, characterised in that the monomers are added to the grafting solution in the form of an emulsion.

**22.** Process according to claims 1 to 21, characterised in that as reducing agent for removal of the halogen atoms during the grafting there is used sodium dithionite, sodium dithionite at a pH value of 6 to 10, preferably of 7.5 to 8, and in concentration of 0.02 to 1%, rongalite, rongalite at temperatures of above 40°C, rongalite in combination with EDTA-complexed $FE^{2+}$ at a pH value of approximately 10, hydrazine, ascorbic acid, or ascorbic acid in the alkaline range.

**23.** Process according to claim 22, characterised in that sodium dithionite is used at a redox potential of -100 to -700 mV, preferably between -100 and -500 mV, and selectably the redox potential is potentiometrically determined during the grafting and kept constant by admetering of a sodium dithionite concentrate.

**24.** Process according to claims 1 to 23, characterised in that as nitrogen-containing formed body there is used such of aliphatic polyamides, polyurethanes, polysulfonamides and of polymers which do not have the nitrogen in the main chain but in the side chain.

**25.** Process according to claim 24, characterised in that the formed body is used in the form of foils, capillaries, fibres or tissues, fleeces or membranes made therefrom.

**26.** Process according to claim 25, characterised in that the formed body is used in the form of fibres in a thickness range of 1 to 100 μm and a surface/mass ratio of 0.4 to 4 $m^2/g$.

**27.** Process according to claims 1 to 26, characterised in that areal web materials are used for the grafting.

**28.** Process according to claim 27, characterised in that the web is impregnated with the grafting solution and the grafting is carried out continuously in a dwell time under inert gas.

**29.** Process according to claim 27, characterised in that it is carried out discontinuously on a jigger.

**30.** Process according to claim 27, characterised in, that it is carried out continuously in a grafting bath.

**31.** Process according to claim 30, characterised in that the monomer concentration is kept constant through use of a monomer of limited water solubility and by maintenance of the saturation concentration.

**32.** Process according to claim 31, characterised in that the saturation concentration of the monomer is reduced through the addition of electrolytes.

**33.** Formed bodies grafted with ethylenically unsaturated monomers and produced by grafting of formed bodies of nitrogen-containing polymers, the nitrogen atoms of which are linked to hydrogen atoms, which can be substituted by halogens, with a surface/mass ratio of 0.4 to 50 $m^2/g$, characterised in that the degree of grafting is 1 to 700%.

**34.** Grafted formed bodies according to claim 33, characterised in that the degree of grafting is 1 to 5%.

**35.** Grafted formed bodies according to claim 33, characterised in that the degree of grafting is 5 to 45%.

**36.** Grafted formed bodies according to claim 33, characterised in that the grafted on monomers are acrylates or methacrylates of polyols, preferably such of ethylene glycol, glycerol, diethylene glycol, octaethylene glycol or of propylene glycol, wherein the grafted formed bodies exhibit an elevated wettability by water in comparison to non-grafted formed bodies.

**37.** Grafted formed bodies according to claim 33, characterised in that they exhibit am elevated resistance to chain degradation and/or a reduced sensitivity to hydrolysis, oxidation and radiation in comparison to non-grafted formed bodies.

**38.** Grafted formed bodies according to claims 34 and 35, produced by grafting of microporous nylon membranes containing no additive of extractable antioxidants, characterised in that the grafted nylon membranes show no measurable diminution of mechanical strength after more than one hour of autoclaving at at least 140° C in the presence of atmospheric oxygen.

**39.** Grafted formed bodies according to claim 35, produced by grafting of a microporous nylon 6 membrane with hydroxyethylmethacrylate, characterised in that the grafted membrane is capable, in the case of a degree of grafting of at least 10%, of absorbing 10 μ1 of a 17% salt solution within 200s and, in the case of a degree of grafting of at least 20%, 10 μl of a 17% salt solution within 85s or 10 μ1 of a 26% salt solution within 300s.

**40.** Use of grafted formed bodies according to the preceding claims for adsorptive bonding.

**41.** Use according to claim 40, characterised in that after grafting monomers containing hydroxyl groups, synthetic or natural ligands for affinity chromatography are fixed.

**Revendications**

**1.** Procédé de greffage superficiel de produits moulés, notamment de membranes microporeuses constituées de polymères azotés, avec des monomères éthyléniquement insaturés, caractérisé en ce que :
a) en utilisant des hypohalogénites inorganiques ou organiques et/ou des dérivés N-halogénés organiques comme agent d'halogénation, on remplace des atomes d'hydrogène par des atomes d'halogène sur les atomes d'azote des membranes polymères ou des produits moulés polymères,
b) on élimine une partie de ces atomes d'halogène au moyen d'agents de réduction en présence de monomères éthyléniquement insaturés, avec greffage radicalaire de ceux-ci sur les atomes d'azote, et
c) ensuite, on enlève les atomes d'halogène restants au moyen d'agents de réduction, en l'absence de monomères.

**2.** Procédé selon la revendication 1, caractérisé en ce qu'on utilise un agent de chloration comme agent d'halogénation.

**3.** Procédé selon la revendication 2, caractérisé en ce qu'on utilise, comme agent de chloration, un hypochlorite inorganique, de préférence l'hypochlorite de sodium en solution aqueuse, un hypochlorite organique, de préférence l'hypochlorite de t-butyle dissous dans un solvant organique inerte, le sel de sodium du N-chloro-p-toluènesulfonamide avec un poids de composition de 230 et une constante d'hydrolyse d'environ $10^{-8}$, ou l'acide dichloroisocyanurique.

**4.** Procédé selon la revendication 3, dans lequel on utilise un hypochlorite inorganique, caractérisé en ce que le pH de l'agent de chloration vaut de 5 à 7, de préférence environ 6.

**5.** Procédé selon la revendication 3, dans lequel on utilise un hypochlorite inorganique, caractérisé en ce que la teneur en chlore actif de l'agent de chloration est de 0,05 à 3 %, de préférence 0,1 à 0,5 %.

**6.** Procédé selon les revendications 3 à 5, caractérisé en ce qu'on effectue la chloration à la température ambiante, et le temps de chloration est de 30 s à 5 min, de préférence 1 à 2 min, pour produire un greffage matriciel, ou de 5 à 15 min, de préférence environ 10 min, pour produire un greffage superficiel pur.

**7.** Procédé selon la revendication 3, dans lequel on utilise un hypochlorite organique, caractérisé en ce qu'on utilise, comme solvant organique, du n-hexane, du chlorure de méthylène ou de l'acétone.

**8.** Procédé selon la revendication 3, dans lequel on utilise le sel de sodium du N-chloro-p-toluènesulfonamide, caractérisé en ce que le pH de l'agent de chloration vaut entre 5 et 7, de préférence environ 6,3.

9. Procédé selon la revendication 3, dans lequel on utilise le sel de sodium du n-chloro-p-toluènesulfonamide, caractérisé en ce que la concentration de l'agent de chloration est de 0,1 à 3 %, de préférence de 1 à 2 %.

10. Procédé selon la revendication 8 ou 9, caractérisé en ce qu'on utilise des temps de chloration de 2 à 10 s pour l'obtention d'un greffage matriciel ou des temps de chloration de 0,5 à 10 min, de préférence de 1 à 5 min, pour l'obtention d'un greffage superficiel pur.

11. Procédé selon la revendication 1, caractérisé en ce qu'on utilise un hypobromite inorganique comme agent d'halogénation.

12. Procédé selon la revendication 11, caractérisé en ce qu'on produit l'hypobromite inorganique in situ en soumettant le produit moulé à bromer successivement à une atmosphère de brome et à une atmosphère d'ammoniac.

13. Procédé selon les revendications 1 à 12, caractérisé en ce qu'on utilise, comme monomères éthyléniquement insaturés, des monomères à insaturation simple.

14. Procédé selon la revendication 13, caractérisé en ce qu'on utilise, comme monomères à insaturation éthylénique simple, l'acide acrylique, l'acide méthacrylique, ainsi que leurs esters ou amides, ou des monomères à insaturation éthylénique simple contenant des groupes hydroxylés.

15. Procédé selon la revendication 14, caractérisé en ce qu'on utilise, comme monomères à insaturation éthylénique simple : le méthacrylate d'hydroxyéthyle, l'éther méthylique de méthacrylamidoglycolate, le méthacrylate de glycérol, le méthacrylate de sulfopropyle, le méthacrylamide de N-morpholinopropyle, l'acide acrylique, la vinylpyrrolidone, l'acide N-acrylamidoglycolique, le méthacrylamide, l'acide 2-acrylamido-2-méthylpropanesulfonique, le chlorure de méthacrylamidopropyltriméthylammonium, le méthacrylate de diéthylèneglycol, le méthacrylate d'hydroxypropyle, l'éther méthylique de méthacrylamidoglycolate, l'acrylate d'hydroxypropyle, l'acrylamide, l'acétate de vinyle, le méthacrylate d'octaéthylèneglycol, le vinylimidazole, le méthylvinylacétamide ou le méthacrylate de glycidyle.

16. Procédé selon les revendications 1 à 12, caractérisé en ce qu'on utilise, comme monomères éthyléniquement insaturés, des monomères à insaturation multiple.

17. Procédé selon la revendication 16, caractérisé en ce qu'on utilise comme monomères à insaturation multiple, le diméthacrylate de pentaérythrite, le diméthacrylate de glycérol, le diméthacrylate de tétraéthylèneglycol ou le diacrylate de tétraéthylèneglycol.

18. Procédé selon les revendications 1 à 17, caractérisé en ce qu'on utilise des mélanges de monomères.

19. Procédé selon les revendications 1 à 18, caractérisé en ce qu'on réticule de manière appropriée les monomères éthyléniquement insaturés greffés.

20. Procédé selon la revendication 19, caractérisé en ce qu'on effectue la réticulation, en utilisant des monomères bifonctionnels, en même temps que le greffage.

21. Procédé selon les revendications 1 à 26, caractérisé en ce qu'on ajoute les monomères à la solution de greffage sous la forme d'une émulsion.

22. Procédé selon les revendications 1 à 21, caractérisé en ce qu'on utilise, comme agents de réduction pour enlever les atomes d'halogène lors du greffage, du dithionite de sodium, le dithionite de sodium étant à pH 6 à 10, de préférence 7,5 à 8, et de la Rongalite à une concentration de 0,02 à 1 % et à une température supérieure à 40°C, la Rongalite étant combinée avec EDTA-$Fe^{2+}$ complexé, à un pH d'environ 10, de l'hydrazine, de l'acide ascorbique ou de l'acide ascorbique dans la plage alcaline.

23. Procédé selon la revendication 22, caractérisé en ce qu'on utilise du dithionite de sodium à un potentiel d'oxydoréduction de -100 à -700 mV, de préférence de -100 à -500 mV et si on le souhaite, on détermine le potentiel d'oxydoréduction par potentiométrie pendant le greffage et on le maintient constant grâce à l'addition dosée d'un concentré de dithionite de sodium.

**24.** Procédé selon les revendications 1 à 23, caractérisé en ce qu'on utilise, comme produits moulés azotés, ceux qui sont constitués de polyamides aliphatiques, de polyuréthanes, de polysulfonamides ainsi que de polymères qui ne contiennent pas l'azote dans la chaîne principale, mais dans la chaîne latérale.

**25.** Procédé selon la revendication 24, caractérisé en ce qu'on utilise des produits moulés sous la forme de feuilles, de tubes capillaires ou de fibres, ou de tissus, non-tissés ou membranes fabriqués à partir de ceux-ci.

**26.** Procédé selon la revendication 25, caractérisé en ce qu'on utilise des produits moulés sous la forme de fibres ayant une épaisseur comprise entre 1 et 100 μm et un rapport surface/poids de 0,4 à 4 $m^2/g$.

**27.** Procédé selon les revendications 1 à 26, caractérisé en ce qu'on utilise des matériaux en bande à plat pour le greffage.

**28.** Procédé selon la revendication 27, caractérisé en ce qu'on imprègne la bande au moyen de la solution de greffage et on effectue le greffage en continu dans une section de séjour dans une atmosphère de gaz inerte.

**29.** Procédé selon la revendication 27, caractérisé en ce qu'on le met en oeuvre de manière discontinue dans un appareil jigger.

**30.** Procédé selon la revendication 27, caractérisé en ce qu'on le met en oeuvre de manière discontinue dans un bain de greffage.

**31.** Procédé selon la revendication 30, caractérisé en ce qu'on maintient la concentration de monomère constante grâce à l'utilisation d'un monomère ayant une solubilité dans l'eau limitée et grâce au maintien de la concentration de saturation.

**32.** Procédé selon la revendication 31, caractérisé en ce qu'on abaisse la concentration de saturation du monomère grâce à l'addition d'électrolytes.

**33.** Produits moulés greffés avec des monomères éthyléniquement insaturés, préparés par greffage de produits moulés à base de polymères azotés dans lesquels des atomes d'hydrogène pouvant être substitués par des atomes d'halogène sont situés sur les atomes d'azote, ayant un rapport surface/poids valant de 0,4 à 50 $m^2/g$, caractérisés en ce que le taux de greffage est de 1 à 700 %.

**34.** Produits moulés greffés selon la revendication 33, caractérisés en ce que le taux de greffage est de 1 à 5 %.

**35.** Produits moulés greffés selon la revendication 33, caractérisés en ce que le taux de greffage est de 5 à 45 %.

**36.** Produits moulés greffés selon la revendication 33, caractérisés en ce que les monomères ajoutés par greffage sont des acrylates ou des méthacrylates de polyols, de préférence ceux de l'éthylèneglycol, du glycérol, du diéthylèneglycol, de l'octaéthylèneglycol ou du propylèneglycol, les produits moulés greffés présentant une meilleure aptitude au mouillage par l'eau, par rapport aux produits moulés non greffés.

**37.** Produits moulés greffés selon la revendication 33, caractérisés en ce qu'ils possèdent, par rapport aux produits moulés non greffés, une plus grande stabilité vis-à-vis de la décomposition de chaîne et/ou une sensibilité diminuée vis-à-vis de l'hydrolyse, de l'oxydation et du rayonnement.

**38.** Produits moulés greffés selon les revendications 34 et 35, préparés par greffage de membranes microporeuses de Nylon ne contenant aucune addition d'anti-oxydants extractibles, caractérisés en ce que les membranes greffées de Nylon ne présentent aucune diminution mesurable de leur solidité mécanique après un traitement de plus d'une heure dans un autoclave à une température d'au moins 140°C en présence d'oxygène atmosphérique.

**39.** Produits moulés greffés selon la revendication 35, préparés par greffage d'une membrane microporeuse de Nylon 6 avec du méthacrylate d'hydroxyéthyle, caractérisés en ce que la membrane greffée est capable d'absorber 10 μl d'une solution de chlorure de sodium à 17 % en l'espace de 200 s pour un taux de greffage d'au moins 10 % et 10 µl d'une solution de chlorure de sodium à 17 % en l'espace de 85 s ou 10 µl d'une solution de chlorure de sodium à 26 % en l'espace de 300 s pour un taux de greffage d'au moins 20 %.

**40.** Utilisation de produits moulés greffés selon les revendications précédentes, pour la liaison par adsorption.

**41.** Utilisation selon la revendication 40, caractérisée en ce qu'après le greffage de monomères contenant des groupes hydroxylés, on fixe des ligands synthétiques ou naturels pour la chromatographie d'affinité.

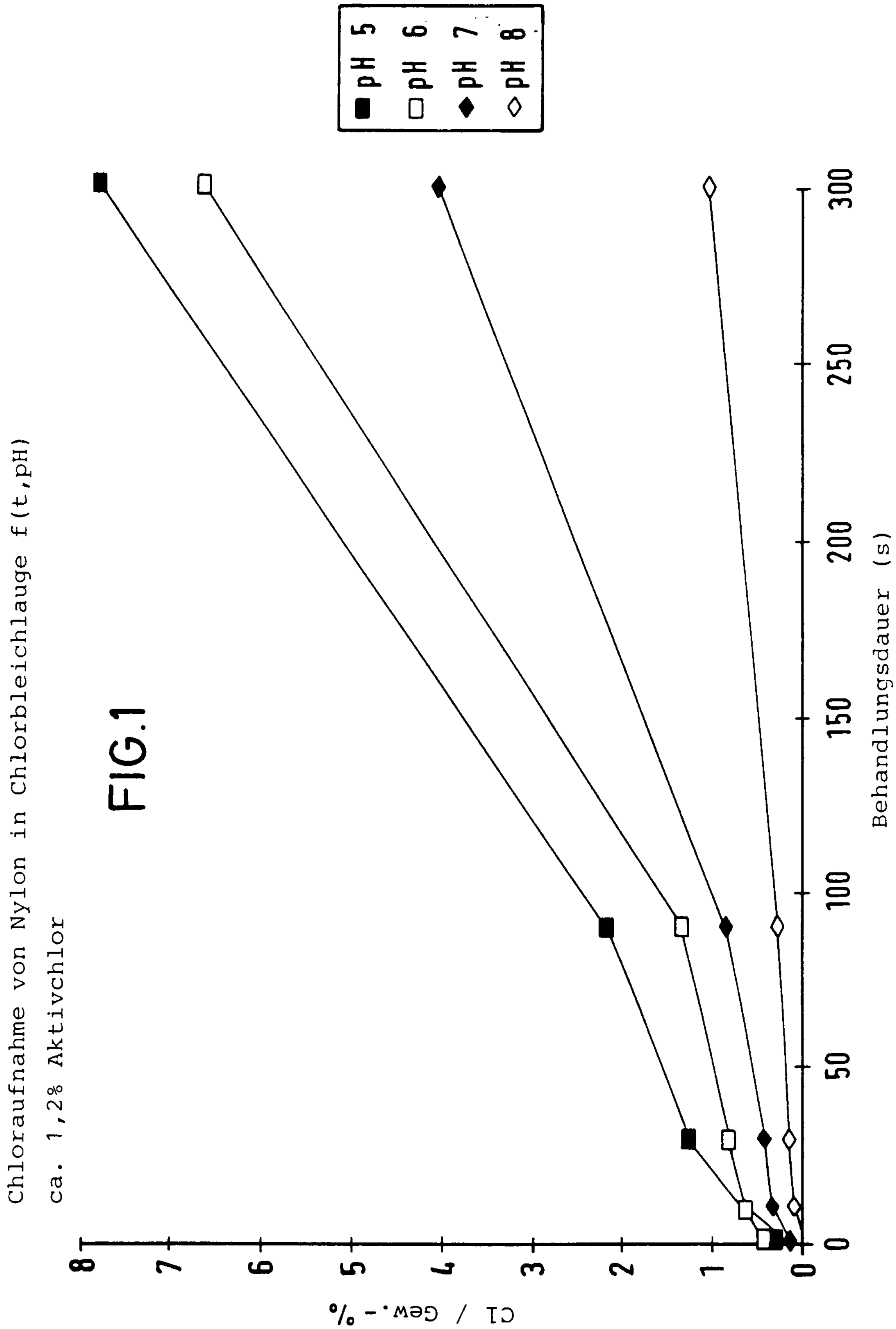
Chloraufnahme von Nylon in Chlorbleichlauge f(t,pH)
ca. 1,2% Aktivchlor
Cl / Gew.- %
Behandlungsdauer (s)
0
1
2
3
4
5
6
7
8
0
50
100
150
200
250
300
pH 5
pH 6
pH 7
pH 8

FIG.1

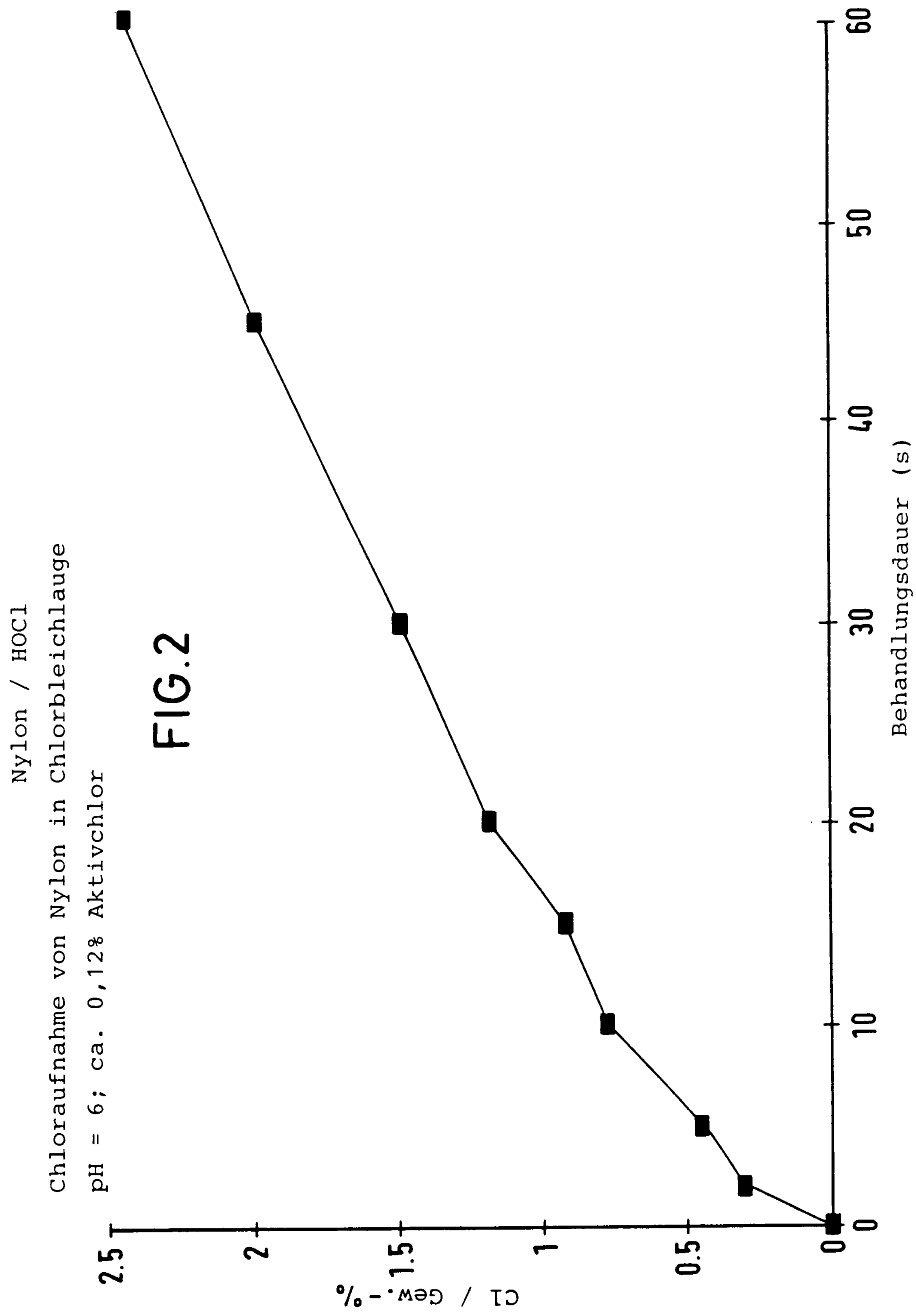
Nylon / HOCl
Chloraufnahme von Nylon in Chlorbleichlauge
pH = 6; ca. 0,12% Aktivchlor
Cl / Gew.-%
0
0.5
1
1.5
2
2.5
Behandlungsdauer (s)
0
10
20
30
40
50
60

FIG.2

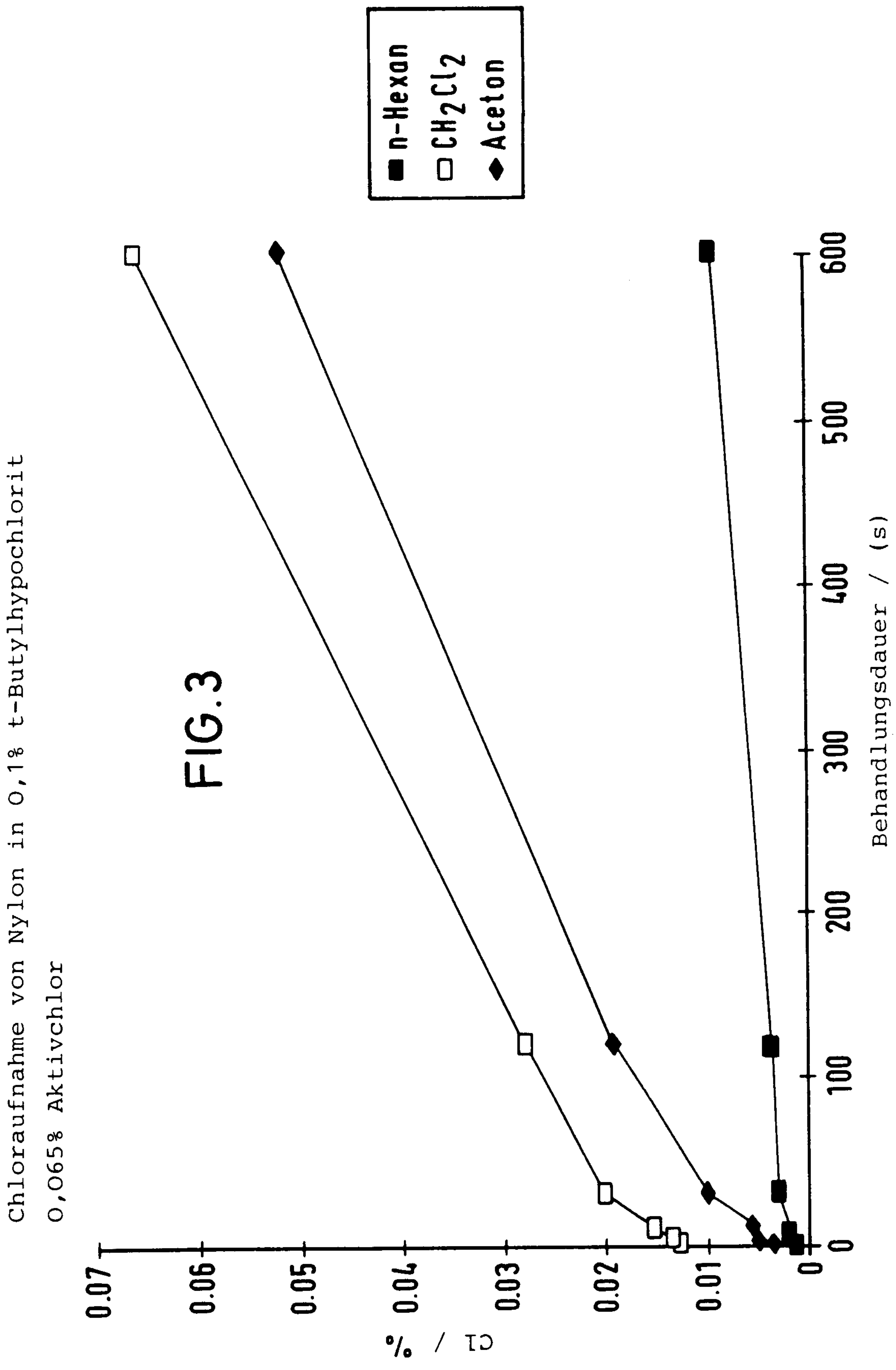
Chloraufnahme von Nylon in 0,1% t-Butylhypochlorit
0,065% Aktivchlor
n-Hexan
$CH_2Cl_2$
Aceton
Cl / %
0.07
0.06
0.05
0.04
0.03
0.02
0.01
0
100
200
300
400
500
600
Behandlungsdauer / (s)

FIG. 3

Chloraufnahme Nylon in Chloramin T in 0,15 m Phosphatpuffer

pH = 6; 0,5% Chloramin T

FIG.4

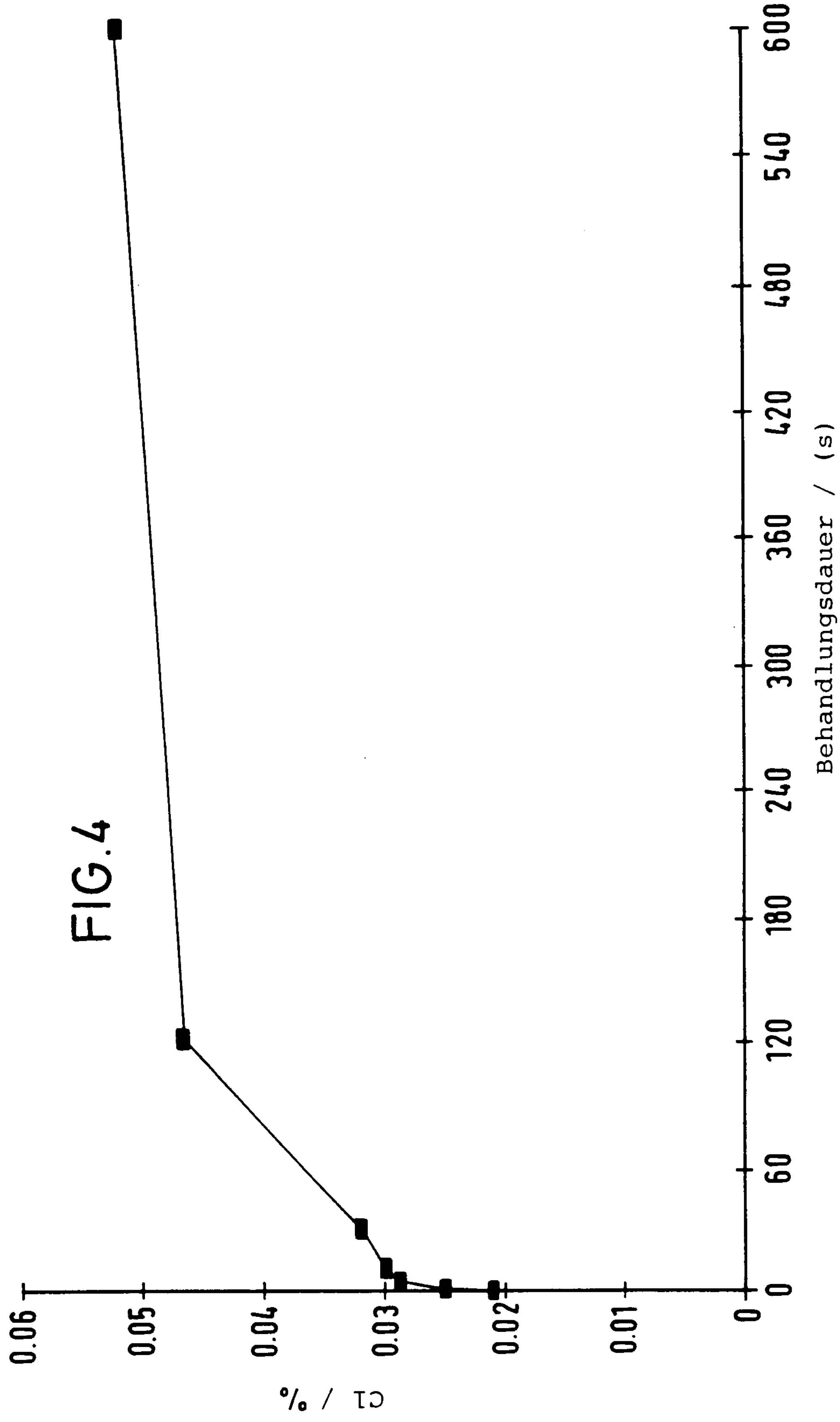

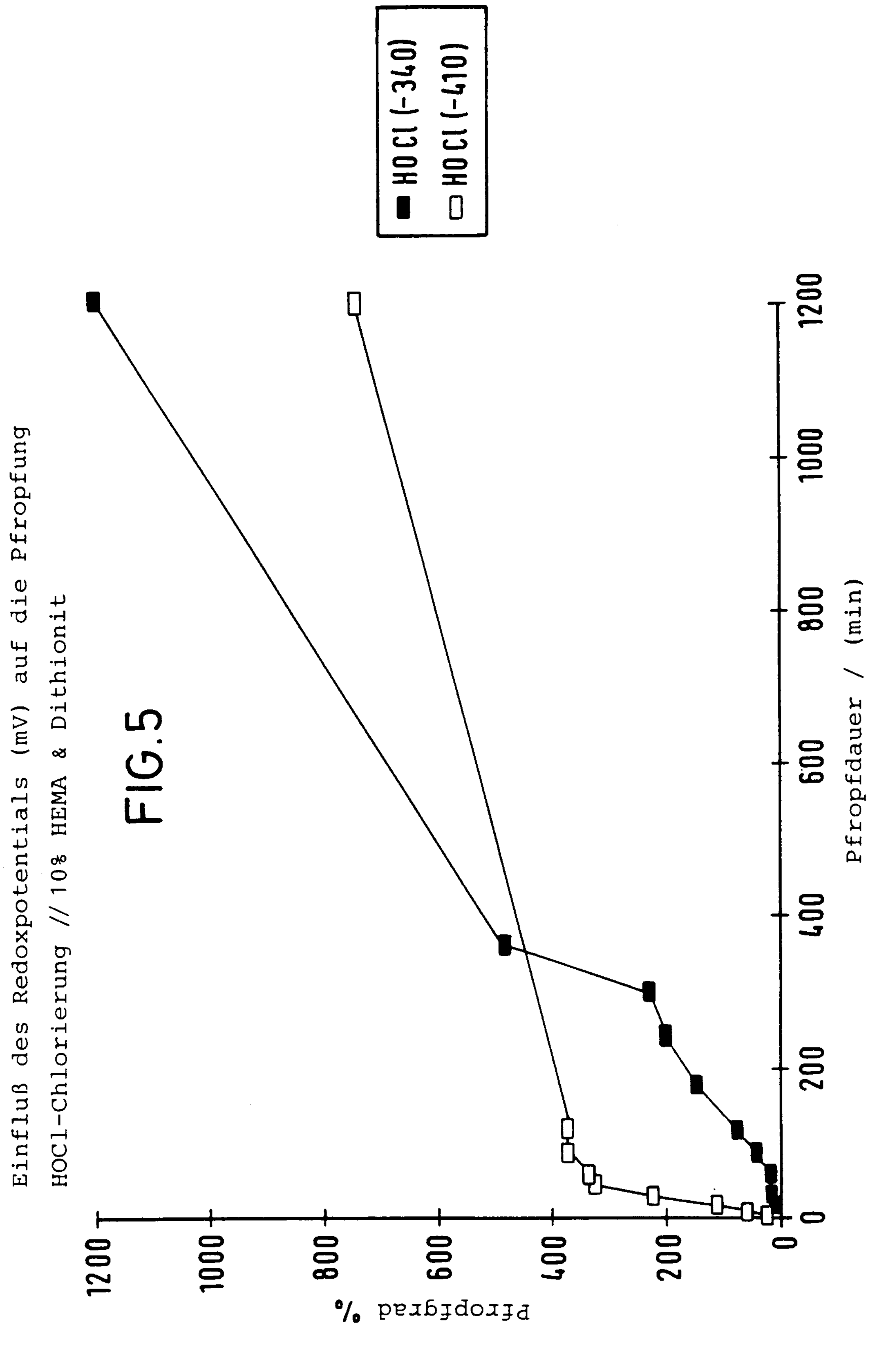
Einfluß des Redoxpotentials (mV) auf die Pfropfung
HOCl-Chlorierung // 10% HEMA & Dithionit
HOCl (-340)
HOCl (-410)
Pfropfgrad %
0
200
400
600
800
1000
1200
Pfropfdauer / (min)

FIG.5

Pfropfung von HEMA (10%) mit $Na_2S_2O_4$; f (Chlorierung / Potential)
Einfluß des Redoxpotentials (mV) auf den Durchfluß (ml/qcm • min • bar)

FIG.6

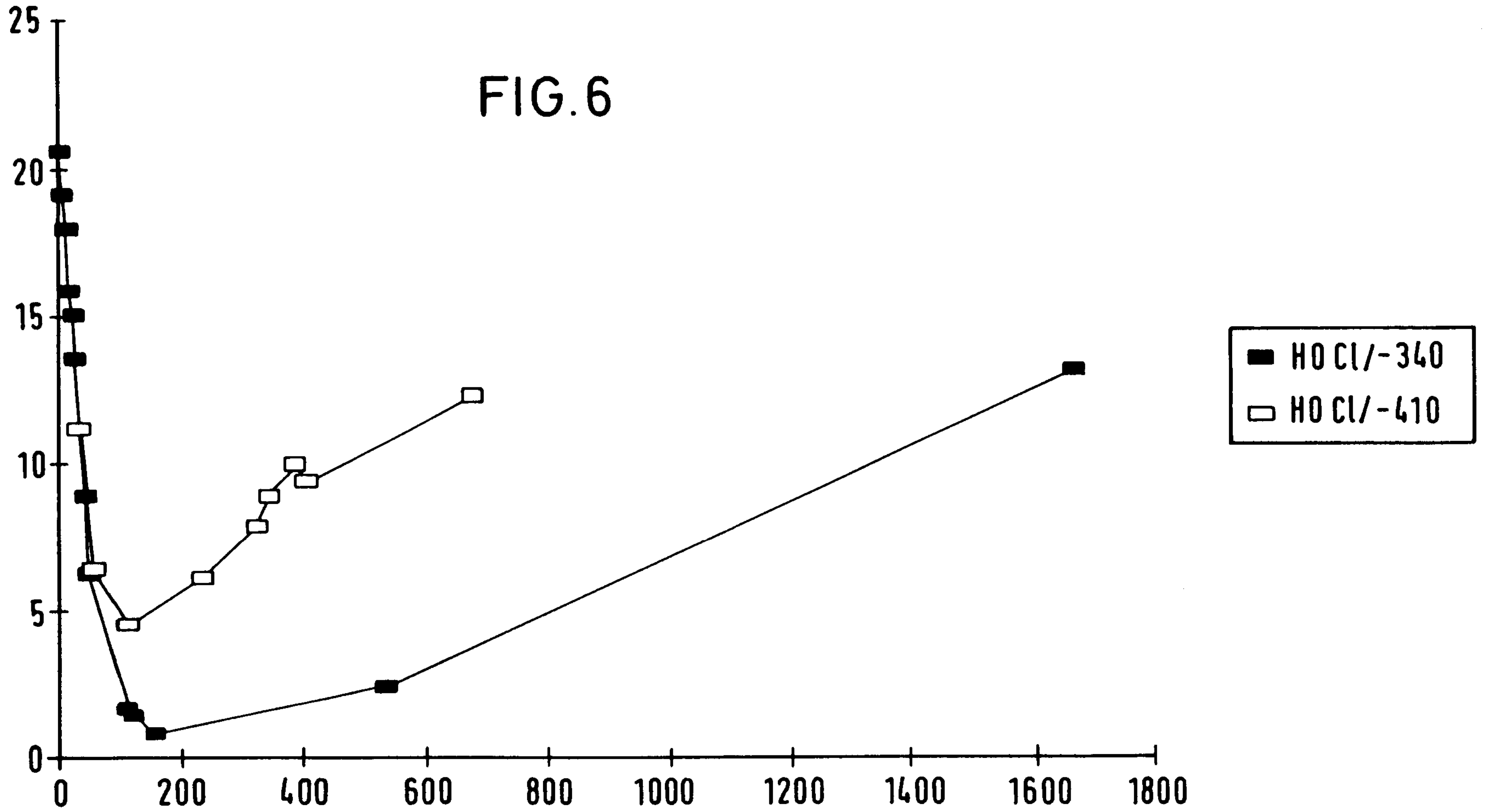


Pfropfgrad / (Gew.-%)

Einfluß der Chlorierung auf die Pfropfung von 10% HEMA mit Dithionit (E=-340 mV)

FIG.7

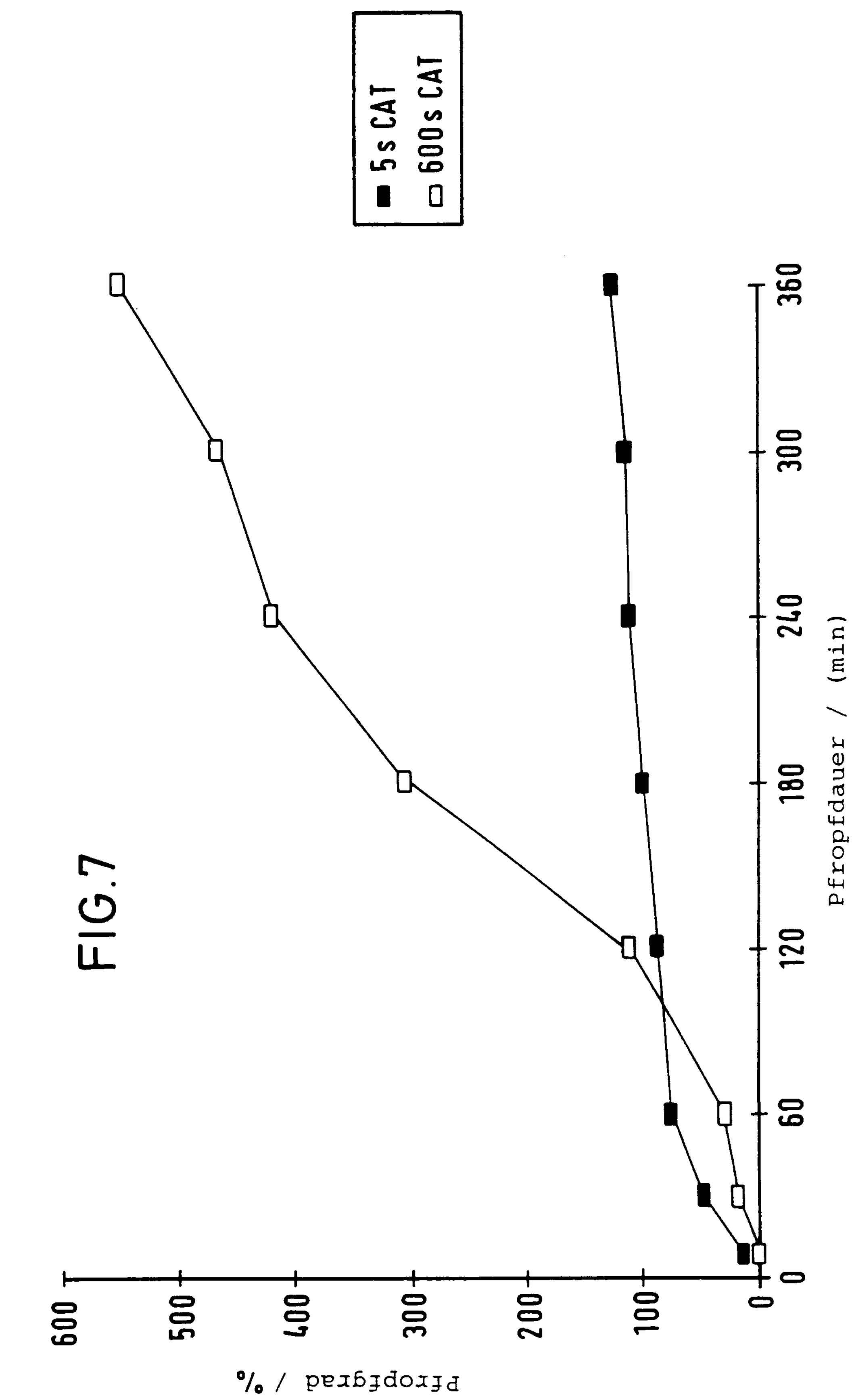

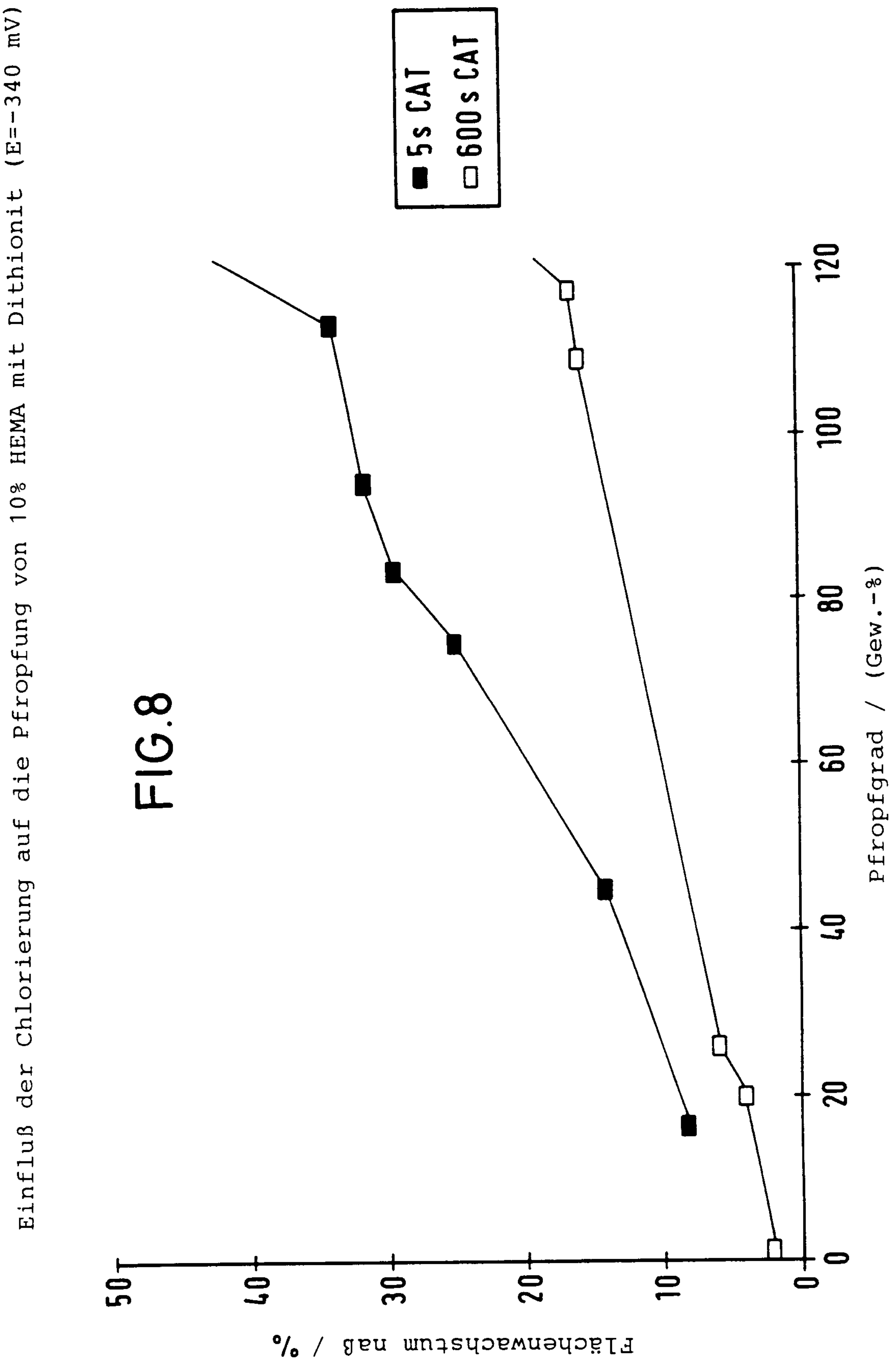
Einfluß der Chlorierung auf die Pfropfung von 10% HEMA mit Dithionit (E=-340 mV)
■ 5s CAT
□ 600s CAT
Flächenwachstum naß / %
0
10
20
30
40
50
Pfropfgrad / (Gew.-%)
0
20
40
60
80
100
120

FIG.8

Einfluß der Chlorierung auf die Pfropfung von 10% HEMA mit Dithionit (E=-340 mV)

FIG.9